# EUROPEAN PATENT APPLICATION

(11) **EP 4 557 857 A1**
(43) Date of publication of application: **21.05.2025**
(21) Application number: 22950564.9
(22) Date of filing: 12.07.2022
(51) Int. Cl.: H04W 72/04

(54) **METHODS AND APPARATUSES FOR DETERMINING CONTROL RESOURCE SET (CORESET) .0**

(71) Applicant: Beijing Xiaomi Mobile Software Co., Ltd., Beijing 100085 (CN)
(72) Inventor: QIAO, Xuemei, Beijing 100085 (CN); MU, Qin, Beijing 100085 (CN); LI, Yuanyuan, Beijing 100085 (CN); BAI, Yingshuang, Beijing 100085 (CN)
(74) Representative: Stöckeler, Ferdinand
(86) International application number: PCT/CN2022/105308
(87) International publication number: WO 2024/011434

(57) **Abstract**

Disclosed in the embodiments of the present application are a method and apparatus for determining a CORESET#0, which can be applied to a communication system. The method comprises: according to a channel bandwidth, which is supported by a first terminal device, and/or a network indication, determining a CORESET#0 of the first terminal device. By means of implementing the embodiments of the present application, a first terminal device can use a determined CORESET#0, which can then support reception of a PDCCH by the first terminal device over as many CORESET resources as possible, so as to enhance the coverage of a channel, thereby improving the reception performance the PDCCH.

## Description

### TECHNICAL FIELD

The present invention relates to the field of communication technologies, and in particular, it relates to a method and device for determining a control resource set CORESET#0.

### BACKGROUND

A reduced capability (eRedcap) terminal may increase service types of the eRedcap terminal by further reducing the bandwidth, for example, reducing the radio frequency (RF) and baseband bandwidth of the eRedcap terminal to 5 MHZ at a low frequency 1 (FR1), to support service types such as a factory sensor and the like, which have low data rate and are sensitive to costs. However, reducing the bandwidth to 5 MHZ results in a smaller number of control channel elements (CCEs), which affects the efficiency of a physical downlink control channel (PDCCH).

### SUMMARY

Embodiments of the present invention provide a method and device for determining a control resource set CORESET#0, which may support a first terminal to receive a PDCCH through as more CORESET resources as possible to enhance the coverage of the channel and improve the reception performance of the PDCCH.

According to a first aspect of embodiments of the present invention, there is provided a method for determining a control resource set CORESET#0, including: determining a CORESET#0 of a first terminal according to a channel bandwidth supported by the first terminal and/or a network indication.

In this technical solution, the CORESET#0 of the first terminal is determined according to the channel bandwidth supported by the first terminal and/or the network indication, such that the first terminal may use the determined CORESET#0, and thus the first terminal may be supported to receive the PDCCH through as more CORESET resources as possible to enhance the coverage of the channel and improve the reception performance of the PDCCH.

According to a second aspect of embodiments of the present invention, there is provided a method for determining a control resource set CORESET#0, including: determining a CORESET#0 of a first terminal; and sending indication information to the first terminal. The indication information indicates resource information of a CORESET#0 of a second terminal and a channel bandwidth supported by the first terminal, and the resource information and/or the channel bandwidth are used for determining the CORESET#0 of the first terminal.

In this technical solution, the CORESET#0 of the first terminal is determined, and the indication information is sent to the first terminal to indicate the channel bandwidth supported by the first terminal and/or the resource information of the CORESET#0 of the second terminal, such that the first terminal may determine the CORESET#0 which may be used by the first terminal based on the indication information, and thus the first terminal may receive the PDCCH through as more CORESET resources as possible to enhance the coverage of the channel and improve the reception performance of the PDCCH.

According to a third aspect of embodiments of the present invention, there is provided a communication device that has some or all of the functions of the terminal for implementing the method of the first aspect. For example, the functions of the communication device may have the functions in some or all of embodiments of the present invention, or may have the function for implementing any one of embodiments of the present invention independently. The functions may be implemented by hardware, or may be implemented by hardware executing corresponding software. The hardware or software includes one or more units or modules corresponding to the functions described above.

In an implementation, the communication device may include in its structure a transceiver module and a processing module, and the processing module is configured to support the communication device to perform the corresponding functions of the method described above. The transceiver module is configured to support communication between the communication device and other devices. The communication device may further include a storage module, which is configured to couple with the transceiver module and the processing module, and stores computer programs and data necessary for the communication device.

As an example, the processing module may be a processor, the transceiver module may be a transceiver or communication interface, and the storage module may be a memory.

According to a fourth aspect of embodiments of the present invention, there is provided another communication device that has some or all of the functions of the network device for implementing examples of the method of the second aspect. For example, the functions of the communication device may have the functions in some or all of embodiments of the present invention, or may have the function for implementing any one of embodiments of the present invention independently. The functions may be implemented by hardware, or may be implemented by hardware executing corresponding software. The hardware or software includes one or more units or modules corresponding to the functions described above.

In an implementation, the communication device may include in its structure a transceiver module and a processing module, and the processing module is configured to support the communication device to perform the corresponding functions of the methods described above. The transceiver module is configured to support communication between the communication device and other devices. The communication device may further include a storage module, which is configured to couple with the transceiver module and the processing module, and stores computer programs and data necessary for the communication device.

According to a fifth aspect of embodiments of the present invention, there is provided a communication device including a processor which, when invoking a computer program in a memory, performs the method of the first aspect described above.

According to a sixth aspect of embodiments of the present invention, there is provided a communication device including a processor which, when invoking a computer program in a memory, performs the method of the second aspect described above.

According to a seventh aspect of embodiments of the present invention, there is provided a communication device, which includes a processor and a memory. A computer program is stored in the memory, and the processor is configured to execute the computer program stored in the memory to cause the communication device to implement the method of the first aspect described above.

According to an eighth aspect of embodiments of the present invention, there is provided a communication device, which includes a processor and a memory. A computer program is stored in the memory, and the processor is configured to execute the computer program stored in the memory to cause the communication device to implement the method of the second aspect described above.

According to a ninth aspect of embodiments of the present invention, there is provided a communication device, which includes a processor and an interface circuit. The interface circuit is configured to receive code instructions and transmit the code instructions to the processor; and the processor is configured to run the code instructions to cause the device to perform the method of the first aspect described above.

According to a tenth aspect of embodiments of the present invention, there is provided a communication device, which includes a processor and an interface circuit. The interface circuit is configured to receive code instructions and transmit the code instructions to the processor; and the processor is configured to run the code instructions to cause the device to perform the method of the second aspect described above.

According to an eleventh aspect of embodiments of the present invention, there is provided a communication system, which includes the communication device of the third aspect and the communication device of the fourth aspect, or includes the communication device of the fifth aspect and the communication device of the sixth aspect, or includes the communication device of the seventh aspect and the communication device of the eighth aspect, or includes the communication device of the ninth aspect and the communication device of the tenth aspect.

According to a twelfth aspect of embodiments of the present invention, there is provided a computer-readable storage medium configured to store instructions for a terminal as described above, and the instructions, when executed, cause the terminal to perform the method of the first aspect described above.

According to a thirteenth aspect of embodiments of the present invention, there is provided a readable storage medium configured to store instructions for a network device as described above that, and the instructions, when executed, cause the network device to perform the method of the second aspect described above.

According to a fourteenth aspect of the present invention, there is provided a computer program product including a computer program that, when run on a computer, causes the computer to perform the method of the first aspect described above.

According to a fifteenth aspect of the present invention, there is provided a computer program product including a computer program that, when run on a computer, causes the computer to perform the method of the second aspect described above.

According to a sixteenth aspect of the present invention, there is provided a chip system including at least one processor and an interface, for supporting a terminal to implement functions involved in the first aspect, for example, determining or processing at least one of data and information involved in the above method. In a possible design, the chip system further includes a memory configured to store computer programs and data necessary for the terminal. The chip system may be composed of chips, or may include chips and other discrete devices.

According to a seventeenth aspect of the present invention, there is provided a chip system including at least one processor and an interface, for supporting a network device to implement functions involved in the second aspect, for example, determining or processing at least one of data and information involved in the above method. In a possible design, the chip system further includes a memory configured to store computer programs and data necessary for the network device. The chip system may be composed of chips, or may include chips and other discrete devices.

According to an eighteenth aspect of the present invention, there is provided a computer program that, when run on a computer, causes the computer to perform the method of the first aspect described above.

According to a nineteenth aspect of the present invention, there is provided a computer program that, when run on a computer, causes the computer to perform the method of the second aspect described above.

### BRIEF DESCRIPTION OF THE DRAWINGS

In order to more clearly illustrate embodiments of the present invention or the technical solutions in the related art, drawings to be used for the description of embodiments of the present invention or the related art are described below.
FIG. 1 is a schematic architectural diagram illustrating a communication system according to embodiments of the present invention;
FIG. 2 is a schematic flow chart illustrating a method for determining a control resource set CORESET#0 according to embodiments of the present invention;
FIG. 3 is a schematic flow chart illustrating another method for determining a control resource set CORESET#0 according to embodiments of the present invention;
FIG. 4 is a schematic flow chart illustrating another method for determining a control resource set CORESET#0 according to embodiments of the present invention;
FIG. 5 is a schematic flow chart illustrating another method for determining a control resource set CORESET#0 according to embodiments of the present invention;
FIG. 6 is a schematic flow chart illustrating another method for determining a control resource set CORESET#0 according to embodiments of the present invention;
FIG. 7 is a schematic flow chart illustrating another method for determining a control resource set CORESET#0 according to embodiments of the present invention;
FIG. 8 is a schematic flow chart illustrating another method for determining a control resource set CORESET#0 according to embodiments of the present invention;
FIG. 9 is a schematic flow chart illustrating another method for determining a control resource set CORESET#0 according to embodiments of the present invention;
FIG. 10 is a schematic flow chart illustrating another method for determining a control resource set CORESET#0 according to embodiments of the present invention;
FIG. 11 is a schematic flow chart illustrating another method for determining a control resource set CORESET#0 according to embodiments of the present invention;
FIG. 12 is a schematic flow chart illustrating another method for determining a control resource set CORESET#0 according to embodiments of the present invention;
FIG. 13 is a schematic flow chart illustrating another method for determining a control resource set CORESET#0 according to embodiments of the present invention;
FIG. 14 is a schematic flow chart illustrating another method for determining a control resource set CORESET#0 according to embodiments of the present invention;
FIG. 15 is a schematic flow chart illustrating another method for determining a control resource set CORESET#0 according to embodiments of the present invention;
FIG. 16 is a schematic flow chart illustrating another method for determining a control resource set CORESET#0 according to embodiments of the present invention;
FIG. 17 is a schematic block diagram illustrating a communication device according to embodiments of the present invention;
FIG. 18 is a schematic block diagram illustrating another communication device according to embodiments of the present invention; and
FIG. 19 is a schematic block diagram illustrating a chip according to embodiments of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of devices and methods consistent with some aspects related to the present invention as recited in the appended claims.

Terms used in the embodiments of the present invention are for the purpose of describing specific embodiments, but should not be construed to limit the embodiments of the present invention. As used in the embodiments of the present invention and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the embodiments of the present invention for describing various information, these information should not be limited by these terms. These terms are used for distinguishing information of the same type from each other. For example, first information may also be referred to as second information, and similarly, the second information may also be referred to as the first information, without departing from the scope of the embodiments of the present invention. As used herein, the term "if" may be construed to mean "when" or "upon" or "in response to determining" depending on the context. For purposes of brevity and ease of understanding, the terms used herein for describing the relationship of size are "greater than" or "less than", "higher than" or "lower than". However, it may be understood to those skilled in the art that the term "greater than" also encompasses the meaning of "greater than or equal to", the term "less than" also encompasses the meaning of "less than or equal to"; the term "higher than" encompasses the meaning of "higher than or equal to", and the term "lower than" also encompasses the meaning of "lower than or equal to".

For ease of understanding, terms are explained as follows:
A CORESET, i.e., a control resource set, is a group of physical resources in a specific area of a downlink resource grid, and is used to carry a PDCCH. A new radio (NR) PDCCH is specifically designed to be sent in a reconfigurable control resource set. A CORESET#0 is used to carry a CORESET of a PDCCH for scheduling an SIB1, and the CORESET#0 may be configured via an MIB.

In order to better understand a method for determining a CORESFT#0 disclosed in embodiments of the present invention, a communication system to which embodiments of the present invention are applicable will be described below.

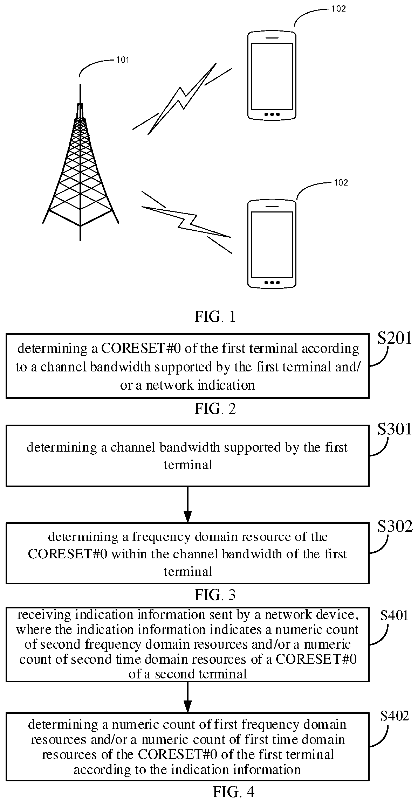

Referring to FIG. 1, FIG. 1 is a schematic architectural diagram illustrating a communication system according to embodiments of the present invention. The communication system may include, but is not limited to, a network device and a terminal. The number and form of devices shown in FIG. 1 are for example and do not constitute a limitation on embodiments of the present invention. In practical applications, two or more network devices and two or more terminals may be included. As an example for illustration, the communication system shown in FIG. 1 includes a network device 101 and a terminal 102.

It should be noted that the technical solutions of embodiments of the present invention may be applied to various communication systems, for example: a long term evolution (LTE) system, a 5th generation (5G) mobile communication system, a 5G new radio (NR) system, or other future new mobile communication systems and the like. It should also be noted that a sidelink in embodiments of the present invention may also be called a side link or a direct communication link.

The network device 101 in embodiments of the present invention is an entity at a network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system and the like. The specific technology and specific device form adopted by the network device are not limited in the embodiments of the present invention. The network device provided by embodiments of the present invention may be composed of a central unit (CU) and distributed units (DUs), in which the CU may also be referred to as a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal 102 in embodiments of the present invention is an entity at a user side for receiving or transmitting signals, such as a mobile phone. The terminal may also be referred to as a terminal device, a user equipment (UE), a mobile station (MS), a mobile terminal (MT) and the like. The terminal may be a device with a communication function, such as an automobile, a smart automobile, a mobile phone, a wearable device, a Pad, a computer with a wireless transceiving function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home and the like. The specific technology and specific device form used by the terminal are not limited in embodiments of the present invention.

In sidelink communication, there are four sidelink transmission modes. A sidelink transmission mode 1 and a sidelink transmission mode 2 are used in device-to-device (D2D) communication of terminals. A sidelink transmission mode 3 and a sidelink transmission mode 4 are used in vehicle to everything (V2X) communication. In a case where the sidelink transmission mode 3 is used, resource allocation is scheduled by the network device 101. Specifically, the network device 101 may send resource allocation information to the terminal 102, and then the terminal 102 allocates resources to other terminal, such that the other terminal may send information to the network device 101 through the allocated resources. In the V2X communication, a terminal having a better signal or a higher reliability may be used as the terminal 102. A first terminal described in embodiments of the present invention may refer to the terminal 102, and a second terminal may refer to the other terminal.

It may be understood that the communication system described in embodiments of the present invention is for a purpose of more clearly illustrating the technical solution of embodiments of the present invention, but does not constitute a limitation on the technical solutions provided by embodiments of the present invention. Moreover, it is known by those skilled in the art that the technical solutions provided by embodiments of the present invention are also applicable to similar technical problems with the evolution of the system architecture and the emergence of new business scenarios.

It should be noted that the method for determining the CORESET#0 provided by any embodiment of the present invention may be performed alone, or may be performed in combination with possible implementation manners in other embodiments, or may be performed in combination with any technical solution in the related art.

Hereinafter, a method and device for detecting scheduling information provided by the present invention will be described in detail with reference to the accompanying drawings.

Referring to FIG. 2, FIG. 2 is a schematic flow chart illustrating a method for determining a CORESET#0 according to embodiments of the present invention. The method for determining the CORESET#0 is performed by a first terminal. As shown in FIG. 2, the method may include but is not limited to a following step.

InS201, a CORESET#0 of the first terminal is determined according to a channel bandwidth supported by the first terminal and/or a network indication.

Optionally, the first terminal may be an eRedcap terminal.

In a possible implementation, the first terminal determines the CORESET#0 of the first terminal according to the channel bandwidth supported by the first terminal. Optionally, the first terminal may determine frequency domain resources of the CORESET#0 within the channel bandwidth supported by the first terminal. That is, the frequency domain resources of the CORESET#0 of the first terminal do not exceed the channel bandwidth of the first terminal. Optionally, the channel bandwidth of the first terminal may be determined according to a protocol or the network indication.

In another possible implementation, the first terminal may determine the CORESET#0 of the first terminal according to the network indication. Optionally, the first terminal may receive indication information sent by the network device, and the indication information may indicate a numeric count of frequency domain resources and/or a numeric count of time domain resources occupied by the CORESET#0 of the first terminal. In some implementations, the numeric count of the frequency domain resources and/or the numeric count of the time domain resources occupied by the CORESET#0 of the first terminal may be directly and explicitly indicated. Optionally, the indication information may implicitly indicate the numeric count of the frequency domain resources and/or the numeric count of the time domain resources occupied by the CORESET#0 of the first terminal. For example, the indication information may indicate a numeric count of frequency domain resources and/or a numeric count of time domain resources occupied by a CORESET#0 of a second terminal. It should be noted that the second terminal may be a legacy terminal. Optionally, the time domain resource may include a slot, a subframe, a symbol.

Further, the numeric count of the frequency domain resources and/or the numeric count of the time domain resources occupied by the CORESET#0 of the first terminal is determined according to the numeric count of the frequency domain resources and/or the numeric count of the time domain resources occupied by the CORESET#0 of the second terminal. For the convenience of explanation, in the present invention, the numeric count of the frequency domain resources occupied by the CORESET#0 of the first terminal may be referred to as the numeric count of first frequency domain resources, and the numeric count of the time domain resources occupied by the CORESET#0 of the first terminal may be referred to as the numeric count of first time domain resources. In the present invention, the numeric count of the frequency domain resources occupied by the CORESET#0 of the second terminal may be referred to as the numeric count of second frequency domain resources, and the numeric count of the time domain resources occupied by the CORESET#0 of the second terminal may be referred to as the numeric count of second time domain resources. It should be noted that the definitions are applicable to each embodiment in the present invention and will not be described again.

In yet another possible implementation, the first terminal determines the CORESET#0 of the first terminal according to the channel bandwidth supported by the first terminal and the network indication. Optionally, the first terminal may receive the indication information sent by the network device, and determine the CORESET#0 of the first terminal within the channel bandwidth supported by the first terminal according to the indication information.

Optionally, the indication information may be carried by a master information block (MIB), that is, the first terminal may receive the MIB sent by the network device, and determine the indication information from the MIB. In some implementations, the indication information may be carried in an 8-bit field of Pdcch-ConfigSIB1 in the MIB, e.g. may be carried in high 4 bits in the Pdcch-ConfigSIB1.

Optionally, the indication information may be sent via other information, and the other information may be existing information or newly defined information. In the case where the other information is existing information, an idle information field in the existing information may be reused to carry the indication information. In embodiments of the present invention, the CORESET#0 of the first terminal is determined according to the channel bandwidth supported by the first terminal and/or the network indication, such that the first terminal may use the determined CORESET#0, and the first terminal may be supported to receive the PDCCH through as more CORESET resources as possible to enhance the coverage of the channel and improve the reception performance of the PDCCH.

Referring to FIG. 3, FIG. 3 is a schematic flow chart illustrating a method for determining a CORESET#0 according to embodiments of the present invention. The method for determining the CORESET#0 is performed by a first terminal. As shown in FIG. 3, the method may include but is not limited to the following steps.

In S301, a channel bandwidth supported by the first terminal is determined.

Optionally, the first terminal may be an eRedcap terminal.

Optionally, the channel bandwidth supported by the first terminal may be determined according to a protocol or a network indication.

In S302, frequency domain resources of the CORESET#0 are determined within the channel bandwidth of the first terminal.

In an implementation, a master information block (MIB) for configuring the CORESET#0 is carried by a physical broadcast channel (PBCH). The first terminal may read the same MIB as a second terminal, but a width of a part of a CORESET#0 of the second terminal may exceed the channel bandwidth of the first terminal, in which case the first terminal is often unable to use the part of the CORESET#O. In order to solve the above problem, in embodiments of the present invention, it may be specified in advance that the frequency domain resources occupied by the CORESET#0 of the first terminal do not exceed the channel bandwidth of the first terminal. Accordingly, the first terminal may determine the frequency domain resources of the CORESET#0 within the channel bandwidth of the first terminal, such that it may be ensured that the first terminal may normally use the CORESET#0.

Optionally, in embodiments of the present invention, it may be specified that the CORESET#0 of the first terminal has a different frequency domain resource position from that of the CORESET#0 of the second terminal, such that the CORESET#0 of the two terminals may implement frequency-division multiplexing (FDM). Optionally, there is an interval of N RBs between the CORESET#0 of the first terminal and the CORESET#0 of the second terminal.

For example, there is an interval of N RBs between an RB with a lowest frequency corresponding to the CORESET#0 of the first terminal and an RB with a highest frequency corresponding to the CORESET#0 of the second terminal. That is, there is an interval of N RBs between a bottom RB of a CORESET#0 of an eRedCap UE and a top RB of a CORESET#0 of a legacy UE.

As another example, there is an interval of N RBs between an RB with a highest frequency corresponding to the CORESET#0 of the first terminal and an RB with a lowest frequency corresponding to the CORESET#0 of the second terminal. That is, there is an interval of N RBs between a top RB of the CORESET#0 of the eRedCap UE and a bottom RB of the CORESET#0 of the legacy UE.

A value of N may be determined by any one of: a protocol; or indication information. For example, the value of N may be 0. In a case where the value of N is 0, it may be understood that the top RB of the CORESET#0 of the eRedCap UE and the bottom RB of the CORESET#0 of the legacy UE are located adjacent to each other in the frequency domain. Optionally, the bottom RB of the CORESET#0 of the eRedCap UE and the top RB of the CORESET#0 of the legacy UE are located adjacent to each other in the frequency domain.

In embodiments of the present invention, the CORESET#0 of the first terminal is determined according to the channel bandwidth supported by the first terminal, such that the frequency domain resources of the determined CORESET#0 are within the channel bandwidth supported by the first terminal, and the first terminal may use the determined CORESET#0 to receive the PDCCH, such that the first terminal receives the PDCCH through as more CORESET resources as possible to enhance the coverage of the channel and improve the reception performance of the PDCCH.

Referring to FIG. 4, FIG. 4 is a schematic flow chart illustrating a method for determining a CORESET#0 according to embodiments of the present invention. The method for determining the CORESET#0 is performed by a first terminal. As shown in FIG. 4, the method may include but is not limited to the following steps.

In S401, indication information sent by a network device is received, and the indication information indicates a numeric count of second frequency domain resources and/or a numeric count of second time domain resources of a CORESET#0 of a second terminal.

Optionally, the first terminal may be an eRedcap terminal; and the second terminal may be a legacy terminal.

In embodiments of the present invention, a numeric count of time frequency domain resources occupied by the CORESET#0 of the first terminal may be different from the numeric count of time frequency domain resources occupied by the CORESET#0 of the second terminal. Optionally, different numbers of frequency domain resources of the CORESET#0 may be configured for the first terminal and the second terminal, i.e., the RedCap terminal and the legacy terminal. For example, the numeric count of the frequency domain resources occupied by the CORESET#0 of the first terminal may be 24 resource blocks (RBs). The numeric count of the frequency domain resources occupied by the CORESET#0 of the second terminal may be 48 or 96 RBs.

In 402, a numeric count of first frequency domain resources and/or a numeric count of first time domain resources of the CORESET#0 of the first terminal are determined according to the indication information.

In a case of such an agreement, the first terminal may receive the indication information sent by the network device, and determine the numeric count of the first frequency domain resources and/or the numeric count of the first time domain resources occupied by the CORESET#0 of the first terminal according to the indication information.

Optionally, the indication information may indicate the numeric count of the second frequency domain resources and/or the numeric count of the second time domain resources of the CORESET#0. In embodiments of the present invention, the numeric count of the second frequency domain resources indicated by the indication information may be the numeric count of the time domain resources occupied by the CORESET#0 of the second terminal; and/or the numeric count of the second time domain resources indicated by the indication information may be the numeric count of the frequency domain resources occupied by the CORESET#0 of the second terminal. In embodiments of the present invention, the first terminal may determine the numeric count of the first frequency domain resources and/or the numeric count of the first time domain resources based on the numeric count of the second frequency domain resources and/or the numeric count of the second time domain resources.

In some implementations, the first terminal may determine the numeric count of the first frequency domain resources according to the indication information. The first terminal may determine the numeric count of the second time domain resources indicated by the indication information as the numeric count of the first time domain resources occupied by the CORESET#0 of the first terminal in response to the numeric count of the second frequency domain resources not exceeding a first preset value. For example, the first preset value is 24 RBs, in a case where the numeric count of the second frequency domain resources occupied by the CORESET#0 of the second terminal is 24, the numeric count of the second frequency domain resources does not exceed 24, and the first terminal determines the numeric count of the first frequency domain resources as 24 RBs. Optionally, the first terminal may further determine the numeric count of the second time domain resources indicated by the indication information as the numeric count of the first time domain resources occupied by the CORESET#0 of the first terminal.

The first terminal determines the numeric count of the first frequency domain resources as the first preset value in response to the numeric count of the second frequency domain resources indicated by the indication information exceeding the first preset value. For example, the first preset value is 24 RBs, in a case where the numeric count of the second frequency domain resources occupied by the CORESET#0 of the second terminal is 48 or 96, the numeric count of the second frequency domain resources exceeds 24, and the first terminal determines the numeric count of the first frequency domain resources as 24 RBs. Further, the numeric count of the first time domain resources occupied by the CORESET#0 of the first terminal may be determined in a set manner. Optionally, the numeric count of the first time domain resources is determined according to the numeric count of the second time domain resources indicated by the indication information. Optionally, the numeric count of the first time domain resources is determined according to the numeric count of the second time domain resources, the numeric count of the second frequency domain resources and the numeric count of the first frequency domain resources. Optionally, the numeric count of time domain resources occupied by the CORESET#0 of the first terminal is determined as a fixed numeric count of symbols. Optionally, the first terminal may remap a numeric count of time domain resources indicated by an index carried in an MIB to determine the numeric count of the first time domain resources.

It should be noted that the first preset value is determined according to a bandwidth supported by the first terminal or specified by a protocol, and different subcarrier intervals have different first preset values. For example, the subcarrier interval is 15 kHz, and the first preset value may be 24; the subcarrier interval is 30 kHz, and the first preset value may be 10, 12, and the like.

In embodiments of the present invention, the CORESET#0 of the first terminal is determined according to the indication information of the network device, such that the first terminal may receive a PDCCH by using the determined CORESET#0, and the first terminal receives the PDCCH through as more CORESET resources as possible to enhance the coverage of the channel and improve the reception performance of the PDCCH.

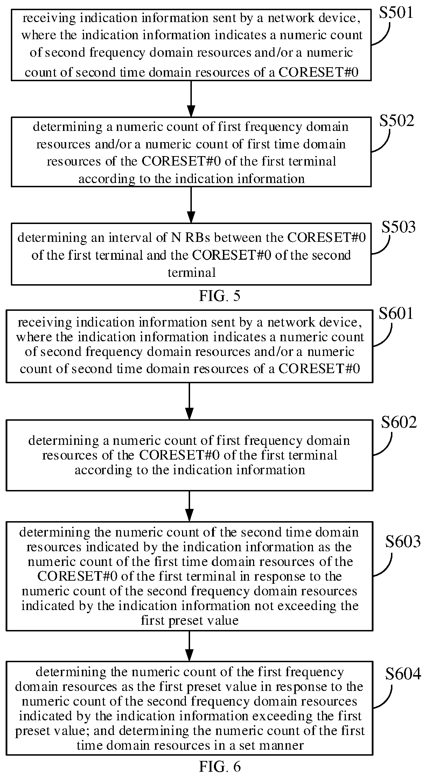

Referring to FIG. 5, FIG. 5 is a schematic flow chart illustrating a method for determining a CORESET#0 according to embodiments of the present invention. The method for determining the CORESET#0 is performed by a first terminal. As shown in FIG. 5, the method may include but is not limited to the following steps.

In S501, indication information sent by a network device is received, and the indication information indicates a numeric count of second frequency domain resources and/or a numeric count of second time domain resources of a CORESET#0.

In S502, a numeric count of first frequency domain resources and/or a numeric count of first time domain resources of the CORESET#0 of the first terminal are determined according to the indication information.

The details of the steps S501 and S502 may refer to the relevant descriptions in above embodiments, and will not be described again here.

In embodiments of the present invention, in a case where it is pre-specified that the CORESET#0 of the first terminal has a different numeric count of frequency domain resources from that of the CORESET#0 of a second terminal, it is further specified that the CORESET#0 of the first terminal has a different frequency domain resource position from that of the CORESET#0 of the second terminal.

In S503, an interval of N RBs between the CORESET#0 of the first terminal and the CORESET#0 of the second terminal is determined.

N is a positive integer greater than or equal to 1.

In embodiments of the present invention, since the CORESET#0 of the first terminal has the different frequency domain resource position from that of the CORESET#0 of the second terminal, the two different CORESET#0 may implement the FDM. Optionally, there is an interval of N RBs between the CORESET#0 of the first terminal and the CORESET#0 of the second terminal. Regarding the implementation manners of the interval of N RBs between the CORESET#0 of the first terminal and the CORESET#0 of the second terminal, reference may be made to the relevant contents in the above embodiments, which will not be described again here.

In embodiments of the present invention, the CORESET#0 of the first terminal is determined according to the indication information of the network device, such that the first terminal may use the determined CORESET#0 to receive a PDCCH, and the first terminal receives the PDCCH through as more CORESET resources as possible to enhance the coverage of the channel and improve the reception performance of the PDCCH. Furthermore, since the CORESET#0 of the first terminal and the CORESET#0 of the second terminal are different in the number and position of frequency domain resources, it is possible to avoid an overlap of the two CORESET#0 in the frequency domain, and to avoid transmission collision or resource competition.

Referring to FIG. 6, FIG. 6 is a schematic flow chart illustrating a method for determining a CORESET#0 according to embodiments of the present invention. The method for determining the CORESET#0 is performed by a first terminal. As shown in FIG. 6, the method may include but is not limited to the following steps.

In S601, indication information sent by a network device is received, and the indication information indicates a numeric count of second frequency domain resources and/or a numeric count of second time domain resources of a CORESET#0.

The details of the step S601 may refer to the relevant descriptions in above embodiments, and will not be described again here.

In S602, a numeric count of first frequency domain resources of the CORESET#0 of the first terminal is determined according to the indication information.

In a case where the numeric count of the second frequency domain resources indicated by the indication information does not exceed a first preset value, it is determined that the numeric count of the first frequency domain resources is the numeric count of the second frequency domain resources indicated by the indication information.

In a case where the numeric count of the second frequency domain resources indicated by the indication information exceeds the first preset value, it is determined that the numeric count of the first frequency domain resources is the first preset value.

It should be noted that the first preset value is determined according to a bandwidth supported by the first terminal or specified by a protocol, and different subcarrier intervals have different first preset values.

In S603, the numeric count of the second time domain resources indicated by the indication information is determined as the numeric count of the first time domain resources of the CORESET#0 of the first terminal in response to the numeric count of the second frequency domain resources indicated by the indication information not exceeding the first preset value.

In S604, in response to the numeric count of the second frequency domain resources indicated by the indication information exceeding the first preset value, the numeric count of the first frequency domain resources is determined as the first preset value, and the numeric count of the first time domain resources is determined in a set manner.

In an implementation, the numeric count of the first time domain resources is determined according to the numeric count of the second time domain resources indicated by the indication information. Optionally, a mapping relationship is pre-constructed, and the mapping relationship may be a configuration table for indicating slot symbol(s) occupied by the CORESET#0 of the first terminal and the frequency domain resource, as shown in Table 1:

**Table 1**

| Index | Multiplexing mode of SSB and CORESET | Numeric count of RBs | Numeric count of Symbols | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 48 | 1 | 38 |
| 13 | 1 | 48 | 2 | 38 |
| 14 | 1 | 48 | 3 | 38 |
| 15 | Reserved | Reserved | Reserved | Reserved |

It should be understood that each element in Table 1 exists independently and is illustratively listed in the same table, but it is not intended that all of the elements of the table must exist simultaneously as shown in the table. The value of each element is independent of the value of any of the other elements in Table 1. Therefore, it can be understood by those skilled in the art that the value of each element in Table 1 is an independent embodiment.

In embodiments of the present invention, the indication information may be an index in the above Table 1, and the network device may send the index to the first terminal via an MIB. In some implementations, the index may be carried by an 8-bit field of Pdcch-ConfigSIB1 in the MIB, e.g. may be carried by high 4 bits in the Pdcch-ConfigSIB1.

It should be noted that each index corresponds to a multiplexing mode of the SSB and the CORESET, a numeric count of RBs occupied by a CORESET, a numeric count of symbols occupied by the CORESET, and an offset of the RBs. For example, in a case where the index=7, the numeric count of symbols corresponding to index=7 may be determined as a numeric count of symbols of the first terminal, that is, the numeric count of symbols of 1 is determined as the numeric count of the first time domain resources of the CORESET#0 of the first terminal.

In another implementation, the numeric count of the first time domain resources is determined according to the numeric count of the second time domain resources, the numeric count of the second frequency domain resources and the numeric count of the first frequency domain resources. Optionally, a ratio of the numeric count of the second frequency domain resources to the numeric count of the first frequency domain resources is determined, a product of the ratio and the numeric count of the second time domain resources is obtained, and the product is determined as the numeric count of the first time domain resources. That is, in a case where the time domain resource is a symbol, a numeric count of first symbols of the CORESET#0 of the RedCap UE = (the numeric count of the second frequency domain resources/the numeric count of the first frequency domain resources indicated by the index) * a numeric count of second symbols indicated by the index.

In yet another implementation, the numeric count of time domain resources occupied by the CORESET#0 of the first terminal may be determined as a fixed numeric count of symbols. For example, a time domain duration of the CORESET#0 of the first terminal may always be 3 symbols. That is, the numeric count of the first time domain resources of the CORESET#0 of the first terminal may always be 3 symbols.

In yet another implementation, the first terminal may remap the numeric count of time domain resources indicated by the indication information (index) carried in the MIB to determine the numeric count of the first time domain resources. Optionally, the first terminal may re-determine a mapping relationship between the indication information (index) and the numeric count of time domain resources occupied by the CORESET#0 based on a protocol, the mapping relationship may include multiple pieces of indication information and the numeric count of the first time domain resources occupied by the CORESET#0 of the first terminal corresponding to each piece of indication information. That is, in embodiments of the present invention, it may be defined that the indication information directly indicates the numeric count of the first time domain resources.

After receiving the MIB sent by the network device, the first terminal may determine the indication information from the MIB, and determine the numeric count of the first time domain resources of the CORESET#0 of the first terminal according to the indication information and the mapping relationship. That is, a mapping relationship between the index and a numeric count of time domain symbols is redefined for the first terminal, and after receiving the index indicated by the network device, the first terminal may retrieve in the mapping relationship based on the indicated index, determine the numeric count of symbols corresponding to the indicated index, and determine the numeric count of symbols corresponding to the indicated index as the numeric count of first symbols occupied by the CORESET#0 of the first terminal. As an example, the mapping relationship between the indication information and the numeric count of time domain resources occupied by the CORESET#0 of the first terminal is re-determined for the first terminal, as shown in Table 2.

**Table 2**

| Index | Numeric count of first symbols of CORESET#0 of eRedCap UE |
|---|---|
| 6 | 2 |
| 7 | 2 |
| 8 | 3 |
| 9 | 3 |
| 10 | 3 |
| ... | ... |

It should be understood that each element in Table 2 exists independently and is illustratively listed in the same table, but it is not intended that all of the elements of the table must exist simultaneously as shown in the table. The value of each element is independent of the value of any of the other elements in Table 2. Therefore, it can be understood by those skilled in the art that the value of each element in Table 2 is an independent embodiment.

For example, in a case where the index indicated by the network device is 7, it may be determined that the numeric count of the first symbols occupied by the CORESET#0 of the first terminal is 2.

In embodiments of the present invention, the CORESET#0 of the first terminal is determined according to the indication information of the network device, such that the first terminal may use the determined CORESET#0 to receive a PDCCH, and the first terminal receives the PDCCH through as more CORESET resources as possible to enhance the coverage of the channel and improve the reception performance of the PDCCH.

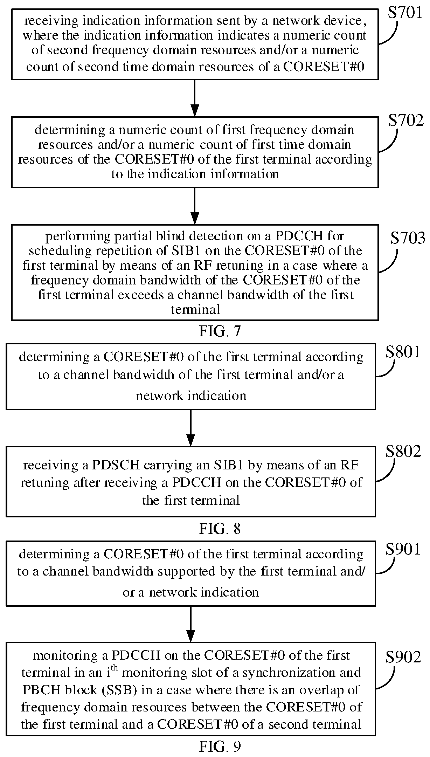

Referring to FIG. 7, FIG. 7 is a schematic flow chart illustrating a method for determining a CORESET#0 according to embodiments of the present invention. The method for determining the CORESET#0 is performed by a first terminal. The process of determining the CORESET#0 of the first terminal according to the channel bandwidth supported by the first terminal and the network indication will be described below, as shown in FIG. 7, the method may include but is not limited to the following steps.

In S701, indication information sent by a network device is received, and the indication information indicates a numeric count of second frequency domain resources and/or a numeric count of second time domain resources of a CORESET#0.

In S702, a numeric count of first frequency domain resources and/or a numeric count of first time domain resources of the CORESET#0 of the first terminal are determined according to the indication information.

The details of the steps S701 and S702 may refer to the relevant descriptions in the above embodiments, and will not be described again here.

In S703, in a case where a frequency domain bandwidth of the CORESET#0 of the first terminal exceeds a channel bandwidth of the first terminal, partial blind detection is performed on a PDCCH for scheduling repetition of system information block 1 (SIB1) on the CORESET#0 of the first terminal by means of a radio frequency retuning (RF retuning).

In embodiments of the present invention, the first terminal may support a size of the frequency domain bandwidth of the CORESET#0 indicated by an MIB. After determining the CORESET#0 of the first terminal, it is further determined whether the frequency domain bandwidth of the CORESET#0 exceeds the channel bandwidth of the first terminal. In a case where the frequency domain bandwidth of the CORESET#0 exceeds the channel bandwidth of the first terminal, in order to make the CORESET#0 usable by the first terminal, the partial blind detection is performed on the PDCCH for scheduling the repetition of the SIB1 by means of the RF retuning, that is, the PDCCH for scheduling the repetition of the SIB1 is blindly detected in segments. For example, assuming that the numeric count of RBs occupied by the CORESET#0 of the first terminal is 48 RBs, and a bandwidth of the eRedCap terminal is 24 RBs, the terminal may first try to receive PDCCH candidate channels on RB#0 to RB#23 at occasion 1 and perform the blind detection; after the RF retuning, the terminal may try to receive PDCCH candidate channels on RB#24 to RB#47 at occasion 2, and combine them with the bits received at occasion 1 and then try to perform the blind detection again.

Optionally, the PDCCH may be configured to carry downlink control information (DCI) for scheduling repetition of the SIB1, and the first terminal may receive the DCI sent by the network device for scheduling the repetition of the SIB1 through the blind detection of the PDCCH. In embodiments of the present invention, the DCI transmitted by the network device has the same scheduling information, and the scheduling information may include scheduled time-frequency domain resources, a numeric count of repetitions of the SIB1, and the like.

Optionally, the first terminal partially receives the DCI sent by the network device for scheduling the repetition of the SIB1 at the same aggregation level and the same candidate channel position. That is, the first terminal performs the partial blind detection of the PDCCH at the same aggregation level and the same candidate channel position to receive the DCI for scheduling the repetition of the SIB1.

In embodiment of the present invention, the CORESET#0 of the first terminal is determined according to the indication information of the network device. Even in a case where the determined CORESET#0 exceeds the channel bandwidth of the first terminal, the first terminal may perform blind detection of the PDCCH in segments, such that the first terminal may use the determined CORESET#0 to receive the PDCCH, and thus the first terminal receives the PDCCH through as many CORESET resources as possible to enhance the coverage of the channel. Further, reception of the DCI in segments may be realized by the blind detection of the PDCCH in segments, such that the SIB1 is re-received based on a physical downlink shared channel (PDSCH) scheduled by the DCI.

Referring to FIG. 8, FIG. 8 is a schematic flow chart illustrating a method for determining a CORESET#0 according to embodiments of the present invention. The method for determining the CORESET#0 is performed by a first terminal. As shown in FIG. 8, the method may include but is not limited to the following steps.

In S801, a CORESET#0 of the first terminal is determined according to a channel bandwidth of the first terminal and/or a network indication.

The details of the step S801 may refer to the relevant descriptions in the above embodiments, and will not be described again here.

In S802, a PDSCH carrying an SIB1 is received by means of an RF retuning after receiving a PDCCH on the CORESET#0 of the first terminal.

After the CORESET#0 of the first terminal is determined, the PDCCH may be received on the CORESET#0 of the first terminal, and the PDSCH carrying the SIB1 may be received by means of the RF retuning after receiving the PDCCH on the CORESET#0 of the first terminal.

Optionally, a slot offset between the PDCCH on the CORESET#0 of the first terminal and the PDSCH corresponding to the PDCCH is determined, and further, the PDCCH on the CORESET#0 of the first terminal and the corresponding PDSCH are received according to the slot offset. The slot offset may be specified by a protocol or indicated by a network, and for example, the slot offset may be 1 slot.

It should be noted that the PDSCH corresponding to the PDCCH on the CORESET#0 of the first terminal may be the same as a PDSCH corresponding to a PDCCH on a CORESET#0 of a second terminal, or the PDSCH corresponding to the PDCCH on the CORESET#0 of the first terminal may be different from a PDSCH corresponding to a PDCCH on a CORESET#0 of a second terminal.

In embodiments of the present invention, the CORESET#0 of the first terminal is determined according to the channel bandwidth of the first terminal and/or the network indication. After the CORESET#0 is determined, the first terminal may use the determined CORESET#0 to receive the PDCCH, such that the first terminal receives the PDCCH through as many CORESET resources as possible to enhance the coverage of the channel. Further, the PDSCH carrying SIB1 may be received by means of the RF retuning to perform channel scheduling and improve rational utilization of channel resources.

Referring to FIG. 9, FIG. 9 is a schematic flow chart illustrating a method for determining a CORESET#0 according to embodiments of the present invention. The method for determining the CORESET#0 is performed by a first terminal. As shown in FIG. 9, the method may include but is not limited to the following steps.

In S901, a CORESET#0 of the first terminal is determined according to a channel bandwidth supported by the first terminal and/or a network indication.

The details of the step S901 may refer to the relevant descriptions in the above embodiments, and will not be described again here.

In S902, a PDCCH on the CORESET#0 of the first terminal is monitored in an i^{th} monitoring slot of a synchronization and PBCH block (SSB) in a case where there is an overlap of frequency domain resources between the CORESET#0 of the first terminal and a CORESET#0 of a second terminal.

i is a positive integer.

For a frequency FR1, multiplexing between the SSB and the CORESET#0 only supports a multiplexing mode 1. Regarding the multiplexing mode 1, a terminal may monitor and detect a PDCCH in a Type 0-CSS corresponding to an SSB at a cycle of 20 ms. Corresponding to one SSB, each monitoring radio frame includes two consecutive monitoring slots. In embodiments of the present invention, regarding the two monitoring slots corresponding to one SSB, the network device may always send the PDCCH corresponding to the first terminal in the former monitoring slot, and send a PDCCH of the second terminal in the latter monitoring slot. Accordingly, in embodiments of the present invention, the first terminal may monitor the PDCCH on the CORESET#0 of the first terminal in the i^{th} monitoring slot of the SSB. It should be noted that the second terminal may monitor the PDCCH on the CORESET#0 of the second terminal in an (i+1)^{th} monitoring slot of the SSB.

In some implementations, the PDCCH is received on the CORESET#0 of the first terminal. After the PDCCH on the CORESET#0 of the first terminal is received, the PDSCH carrying the SIB1 is received by means of the RF retuning. Optionally, a slot offset between the PDCCH on the CORESET#0 of the first terminal and the PDSCH corresponding to the PDCCH is determined. Further, the PDCCH on the CORESET#0 of the first terminal and the corresponding PDSCH are received according to the slot offset. The slot offset may be specified by a protocol, and for example, the slot offset may be 1 slot.

It should be noted that the PDSCH corresponding to the PDCCH on the CORESET#0 of the first terminal may be the same as the PDSCH corresponding to the PDCCH on the CORESET#0 of the second terminal, or the PDSCH corresponding to the PDCCH on the CORESET#0 of the first terminal may be different from the PDSCH corresponding to the PDCCH on the CORESET#0 of the second terminal.

In embodiments of the present invention, the CORESET#0 of the first terminal is determined according to the channel bandwidth of the first terminal and/or the network indication. In a case where there is an overlap of frequency domain resources between the CORESET#0 of the first terminal and the CORESET#0 of the second terminal, the first terminal receives the PDCCH on the determined CORESET#0 in a corresponding monitoring slot, which is different from a monitoring slot of the second terminal. That is, the purpose of receiving the PDCCH through more CORESET resources is implemented by time division multiplexing to enhance the coverage of the channel.

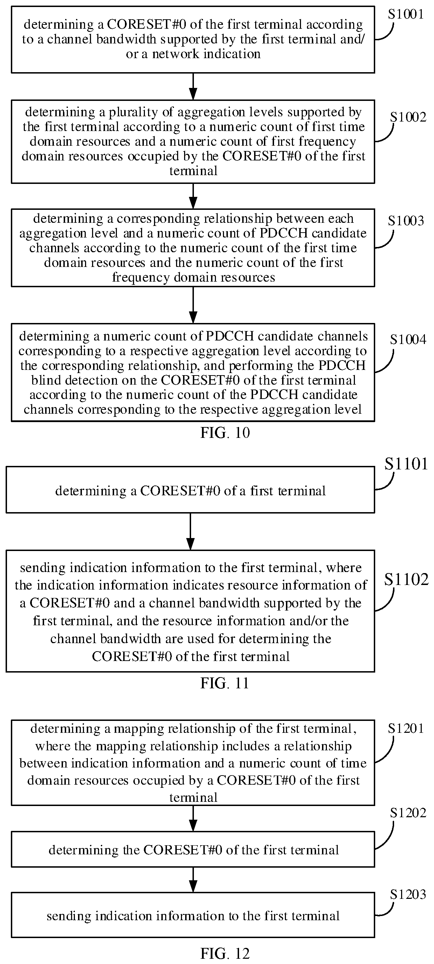

Referring to FIG. 10, FIG. 10 is a schematic flow chart illustrating a method for determining a CORESET#0 according to embodiments of the present invention. The method for determining the CORESET#0 is performed by a first terminal. As shown in FIG. 10, the method may include but is not limited to the following steps.

In S1001, a CORESET#0 of the first terminal is determined according to a channel bandwidth supported by the first terminal and/or a network indication.

The details of the step S1001 may refer to the relevant descriptions in the above embodiments, and will not be described again here.

In S1002, a plurality of aggregation levels supported by the first terminal are determined according to a numeric count of first time domain resources and a numeric count of first frequency domain resources occupied by the CORESET#0 of the first terminal.

The plurality of aggregation levels include an existing aggregation level and a newly added aggregation level.

After determining the numeric count of the first time domain resources and the numeric count of the first frequency domain resources, in embodiments of the present invention, the first terminal may extend an aggregate level (AL) of a control channel element (CCE) supported by the first terminal to obtain the plurality of aggregation levels of the first terminal. Optionally, the plurality of aggregation levels may include AL = 3, AL = 4, AL = 6, and AL = 12, in which AL = 12 may be a newly added aggregation level corresponding to the first terminal.

In S1003, a corresponding relationship between each aggregation level and a numeric count of PDCCH candidate channels is determined according to the numeric count of the first time domain resources and the numeric count of the first frequency domain resources.

Further, the corresponding relationship between the aggregation level and the numeric count of the PDCCH candidate channels is redefined to facilitate PDCCH blind detection on the CORESET#0 of the first terminal according to the corresponding relationship.

Optionally, the corresponding relationship between the aggregation level and the numeric count of PDCCH candidate channels is shown in Table 3.

**Table 3**

| CCE AL | Numeric count of PDCCH candidate channels |
|---|---|
| 4 | 3 |
| 6 | 2 |
| 12 | 1 |

For example, in a case where AL = 4, the numeric count of corresponding PDCCH candidate channels may be 3; in a case where AL = 6, the numeric count of corresponding PDCCH candidate channels may be 2; and in a case where AL = 12, the numeric count of corresponding PDCCH candidate channels may be 1.

Optionally, the corresponding relationship between the aggregation level and the numeric count of PDCCH candidate channels is shown in Table 4.

**Table 4**

| CCE AL | Numeric count of PDCCH candidate channels |
|---|---|
| 3 | 4 |
| 6 | 2 |
| 12 | 1 |

For example, in a case where AL = 3, the numeric count of corresponding PDCCH candidate channels may be 4; in a case where AL = 6, the numeric count of corresponding PDCCH candidate channels may be 2; and in a case where AL = 12, the numeric count of corresponding PDCCH candidate channels may be 1.

It should be understood that each element in Table 3 and Table 4 exists independently and is illustratively listed in the same table, but it is not intended that all of the elements of the table must exist simultaneously as shown in the table. The value of each element is independent of the value of any of the other elements in Table 3 and Table 4. Therefore, it can be understood by those skilled in the art that the value of each element in Table 3 and Table 4 is an independent embodiment.

In S1004, a numeric count of PDCCH candidate channels corresponding to a respective aggregation level is determined according to the corresponding relationship, and the PDCCH blind detection is performed on the CORESET#0 of the first terminal according to the numeric count of the PDCCH candidate channels corresponding to the respective aggregation level.

As shown in Table 3 and Table 4, in a case where AL = 6, the numeric count of corresponding PDCCH candidate channels may be 2, and in this case, the first terminal may perform the PDCCH blind detection on two candidate channels.

Regarding the newly added AL = 12, the numeric count of corresponding PDCCH candidate channels may be 1, and in this case, the first terminal may perform the PDCCH blind detection on one candidate channel.

In embodiments of the present invention, the CORESET#0 of the first terminal is determined according to the channel bandwidth of the first terminal and/or the network indication. After the CORESET#0 is determined, the first terminal may use the determined CORESET#0 to receive the PDCCH, such that the first terminal may receive the PDCCH through as many CORESET resources as possible to enhance the coverage of the channel. Further, expansion of the aggregation level may support the PDCCH blind detection of the newly added aggregation level, thereby improving the reception performance of the PDCCH.

Referring to FIG. 11, FIG. 11 is a schematic flow chart illustrating a method for determining a CORESET#0 according to embodiments of the present invention. The method for determining the CORESET#0 is performed by a network device. As shown in FIG. 11, the method may include but is not limited to the following steps.

In S1101, a CORESET#0 of a first terminal is determined.

Optionally, the first terminal may be an eRedcap terminal, and a second terminal may be a legacy terminal.

In embodiments of the present invention, the network device may determine the CORESET#0 of the first terminal according to a channel bandwidth supported by the first terminal and/or resource information of a CORESET#0 of a second terminal. The specific process is similar to the process of the first terminal determining the CORESET#0 of the first terminal according to the channel bandwidth supported by the first terminal and/or indication information, so reference may be made to the relevant contents in the above embodiments, which will not be described again here.

In S1102, indication information is sent to the first terminal, the indication information indicates the resource information of the CORESET#0 of the second terminal and the channel bandwidth supported by the first terminal, and the resource information and/or the channel bandwidth are used for determining the CORESET#0 of the first terminal.

Optionally, the network device may send the indication information to the first terminal, and the indication information may indicate the channel bandwidth of the first terminal, and further indicates that frequency domain resources of the CORESET#0 of the first terminal do not exceed the channel bandwidth.

Optionally, the indication information indicates the resource information of the CORESET#0 to the first terminal, and the resource information includes a numeric count of second frequency domain resources and/or a numeric count of second time domain resources occupied by the CORESET#0. The numeric count of the second frequency domain resources may be a numeric count of frequency domain resources occupied by the CORESET#0 of the second terminal; and the numeric count of the second time domain resources may be a numeric count of time domain resources occupied by the CORESET#0 of the second terminal.

In some implementations, the indication information is used for determining a numeric count of first frequency domain resources occupied by the CORESET#0 of the first terminal; and/or the numeric count of the second frequency domain resources and the indication information are further used for determining a numeric count of first time domain resources occupied by the CORESET#0 of the first terminal.

Optionally, the numeric count of the second time domain resources indicated by the indication information is determined as the numeric count of the first time domain resources in a case where the numeric count of the second frequency domain resources does not exceed a first preset value.

Optionally, the first preset value is determined according to a bandwidth supported by the first terminal or specified by a protocol, and different subcarrier intervals have different first preset values.

Optionally, the numeric count of the first frequency domain resources of the first terminal is indicated as the first preset value in a case where the numeric count of the second frequency domain resources exceeds the first preset value, and the numeric count of the first time domain resources is determined by the first terminal in a set manner.

Optionally, the first preset value is determined according to the bandwidth supported by the first terminal or specified by a protocol, and different subcarrier intervals have different first preset values.

Regarding the process of the first terminal determining the numeric count of the first frequency domain resources and the numeric count of the first time domain resources of its own CORESET#0 according to the indication information, reference may be made to the relevant contents in the above embodiments, which will not be described again here.

In some implementations, the set manner may be determining the numeric count of the second time domain resources indicated by the indication information as the numeric count of the first time domain resources.

In some other implementations, the set manner may be determining the numeric count of the first time domain resources according to the numeric count of the second time domain resources, the numeric count of the second frequency domain resources, and the numeric count of the first frequency domain resources. Optionally, a ratio of the numeric count of the second frequency domain resources to the numeric count of the first frequency domain resources is determined; and a product of the ratio and the numeric count of the second time domain resources is obtained, and the product is determined as the numeric count of the first time domain resources.

In some other implementations, the set manner may be determining the numeric count of the first time domain resources as a fixed numeric count of symbols.

Optionally, the network device may further indicate through the indication information an interval of N RBs between the CORESET#0 of the first terminal and the CORESET#0 of the second terminal, and N is a positive integer.

In embodiments of the present invention, the CORESET#0 of the first terminal is determined, and the indication information is sent to the first terminal to indicate the channel bandwidth supported by the first terminal and/or the resource information of the CORESET#0, such that the first terminal may determine the CORESET#0 that can be used by the first terminal according to the indication information, and thus the first terminal may receive the PDCCH through as many CORESET resources as possible to enhance the coverage of the channel and improve the reception performance of the PDCCH.

Referring to FIG. 12, FIG. 12 is a schematic flow chart illustrating a method for determining a CORESET#0 according to embodiments of the present invention. The method for determining the CORESET#0 is performed by a network device. As shown in FIG. 12, the method may include but is not limited to the following steps.

In S1201, a mapping relationship of the first terminal is determined, and the mapping relationship includes a relationship between indication information and a numeric count of time domain resources occupied by the CORESET#0 of the first terminal.

Optionally, the network device may determine the mapping relationship based on a protocol, the mapping relationship may include multiple pieces of indication information and a numeric count of time domain resources occupied by the CORESET#0 of the first terminal corresponding to each piece of indication information. Examples may be found in Table 2 in the above embodiments, which will not be repeated here.

In S 1202, the CORESET#0 of the first terminal is determined.

The specific process is similar to the process of the first terminal determining the CORESET#0 of the first terminal according to a channel bandwidth supported by the first terminal and/or indication information. Reference may be made to the relevant contents in the above embodiments, which will not be described again here.

In S 1203, indication information is sent to the first terminal.

The indication information is configured to determine the CORESET#0 of the first terminal, and may indicate a numeric count of second frequency domain resources and/or a numeric count of second time domain resources of a CORESET#0 of a second terminal.

After determining the mapping relationship, the numeric count of the first time domain resources may be determined from the mapping relationship based on the received indication information. For example, in a case where the indication information is an index, and the index indicated by the network device is 7, as shown in Table 2, it may be determined that the numeric count of first symbols occupied by the CORESET#0 of the first terminal is 2.

In embodiments of the present invention, the mapping relationship between the indication information and the numeric count of the first time domain resources occupied by the CORESET#0 of the first terminal is redefined, and the numeric count of the first time domain resources may be determined according to the mapping relationship.

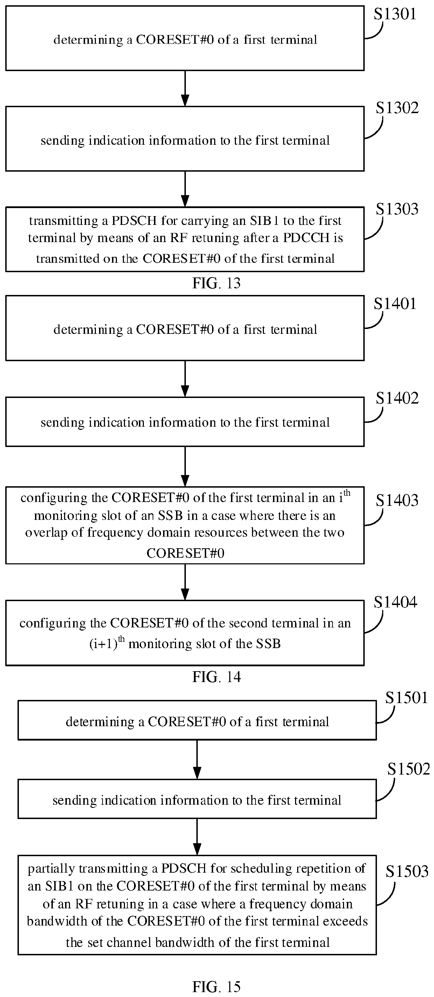

Referring to FIG. 13, FIG. 13 is a schematic flow chart illustrating a method for determining a CORESET#0 according to embodiments of the present invention. The method for determining the CORESET#0 is performed by a network device. As shown in FIG. 13, the method may include but is not limited to the following steps.

In S1301, a CORESET#0 of a first terminal is determined.

In S 1302, indication information is sent to the first terminal.

The indication information indicates resource information of the CORESET#0 and a channel bandwidth supported by the first terminal, and the resource information and/or the channel bandwidth are used for determining the CORESET#0 of the first terminal.

The details of the steps S1301 and S1302 may refer to the relevant descriptions in the above embodiments, and will not be described again here.

In S1303, a PDSCH for carrying an SIB1 is transmitted to the first terminal by means of RF retuning after a PDCCH is transmitted on the CORESET#0 of the first terminal.

Optionally, the network device may determine a slot offset between a PDCCH on the CORESET#0 of the first terminal and a PDSCH corresponding to the PDCCH, and further perform across-slot transmission of the PDCCH and the corresponding PDSCH according to the slot offset. The slot offset may be specified by a protocol, for example, the slot offset may be 1 slot.

It should be noted that the PDSCH corresponding to the PDCCH on the CORESET#0 of the first terminal may be the same as a PDSCH corresponding to a PDCCH on a CORESET#0 of a second terminal, or the PDSCH corresponding to the PDCCH on the CORESET#0 of the first terminal may be different from a PDSCH corresponding to a PDCCH on a CORESET#0 of a second terminal.

In embodiments of the present invention, the CORESET#0 of the first terminal is determined, and the indication information is sent to the first terminal to indicate the channel bandwidth supported by the first terminal and/or the resource information of the CORESET#0, such that the first terminal may determine the CORESET#0 that can be used by the first terminal according to the indication information. Further, the network device may perform PDCCH transmission on the determined CORESET#0, such that the first terminal may use the determined CORESET resource to receive the PDCCH. Furthermore, the PDSCH carrying the SIB 1 may be transmitted to the first terminal by means of the RF retuning to indicate a channel scheduling status, thereby improving the rational utilization of channel resources.

Referring to FIG. 14, FIG. 14 is a schematic flow chart illustrating a method for determining a CORESET#0 according to embodiments of the present invention. The method for determining the CORESET#0 is performed by a network device. As shown in FIG. 14, the method may include but is not limited to the following steps.

In S1401, a CORESET#0 of a first terminal is determined.

In S 1402, indication information is sent to the first terminal.

The indication information indicates resource information of a CORESET#0 and a channel bandwidth supported by the first terminal, and the resource information and/or the channel bandwidth are used for determining the CORESET#0 of the first terminal.

The details of the steps S1401 and S1402 may refer to the relevant descriptions in the above embodiments, and will not be described again here.

In S1403, the CORESET#0 of the first terminal is configured in an i^{th} monitoring slot of an SSB in a case where there is an overlap of frequency domain resources between the two CORESET#0.

In S1404, the CORESET#0 of the second terminal is configured in an (i+1)^{th} monitoring slot of the SSB.

One SSB may include two monitoring slots, and the network device may always send a PDCCH corresponding to the first terminal in the former monitoring slot, and send a PDCCH of the second terminal in the latter monitoring slot. Accordingly, in embodiments of the present invention, the first terminal may monitor the PDCCH on the CORESET#0 of the first terminal in the i^{th} monitoring slot of the SSB. It should be noted that the second terminal may monitor the PDCCH on the CORESET#0 of the second terminal in an (i+1)^{th} monitoring slot of the SSB.

In embodiments of the present invention, in a case where there is an overlap of the frequency domain resources between the CORESET#0 of the first terminal and the CORESET#0 of the second terminal, the network device transmits the PDCCH to the first terminal through the CORESET#0 of the first terminal in the monitoring slot corresponding to the first terminal, and transmits the PDCCH to the second terminal through the CORESET#0 of the second terminal in the monitoring slot corresponding to the second terminal. The two monitoring slots are different, such that the purpose of receiving the PDCCH through more CORESET resources may be realized through time division multiplexing to enhance the coverage of the channel.

Referring to FIG. 15, FIG. 15 is a schematic flow chart illustrating a method for determining a CORESET#0 according to embodiments of the present invention. The method for determining the CORESET#0 is performed by a network device. As shown in FIG. 15, the method may include but is not limited to the following steps.

In S1501, a CORESET#0 of a first terminal is determined.

In S 1502, indication information is sent to the first terminal.

The indication information indicates resource information of a CORESET#0 and a channel bandwidth supported by the first terminal, and the resource information and/or the channel bandwidth are used for determining the CORESET#0 of the first terminal.

The details of the steps S1501 and S1502 may refer to the relevant descriptions in the above embodiments, and will not be described again here.

In S1503, a PDSCH for scheduling repetition of an SIB1 is partially transmitted on the CORESET#0 of the first terminal by means of an RF retuning in a case where a frequency domain bandwidth of the CORESET#0 of the first terminal exceeds a set channel bandwidth of the first terminal.

Optionally, the network device may send DCI for scheduling repetition of the SIB1 to the first terminal, and the DCI has the same scheduling information; and/or the network device may partially send the DCI for scheduling the repetition of the SIB1 to the first terminal at the same aggregation level and the same candidate channel position. i.e., send the DCI for scheduling the repetition of the SIB1 to the first terminal in segments.

In embodiments of the present invention, the first terminal may support a size of the frequency domain bandwidth of the CORESET#0 indicated by an MIB. After determining the CORESET#0 of the first terminal, it is further determined whether the frequency domain bandwidth of the CORESET#0 exceeds the channel bandwidth of the first terminal. In a case where the frequency domain bandwidth of the CORESET#0 exceeds the channel bandwidth of the first terminal, in order to make the CORESET#0 usable by the first terminal, a PDSCH for scheduling the repetition of the SIB1 may be partially transmitted by means of the RF retuning.

Optionally, the network device may send the DCI for scheduling the repetition of the SIB1 to the first terminal. In embodiments of the present invention, the DCI sent by the network device has the same scheduling information, and the scheduling information may include scheduled time-frequency domain resources, the numeric count of repetitions of the SIB1 and the like. The network device performs partial blind detection on the PDCCH for scheduling the repetition of the SIB1 on its own CORESET#0 to receive the DCI.

Optionally, the network device needs to use the same aggregation level and partially send the DCI for scheduling the repetition of the SIB1 to the first terminal at the same candidate channel position. Since the network device sends the DCI at the same aggregation level and the same candidate channel position, the probability of the first terminal to correctly receive the DCI may be increased.

In embodiment of the present invention, the CORESET#0 of the first terminal is determined according to the indication information of the network device. Even in a case where the determined CORESET#0 exceeds the channel bandwidth of the first terminal, the network device may send PDCCH to the first terminal in segments, such that the first terminal may use the determined CORESET#0 to partially receive the PDCCH, and thus the first terminal receives the PDCCH through as many CORESET resources as possible to enhance the coverage of the channel. Furthermore, the DCI may be obtained through PDCCH blind detection, and the DCI may schedule the PDCCH for the repetition of the SIB1.

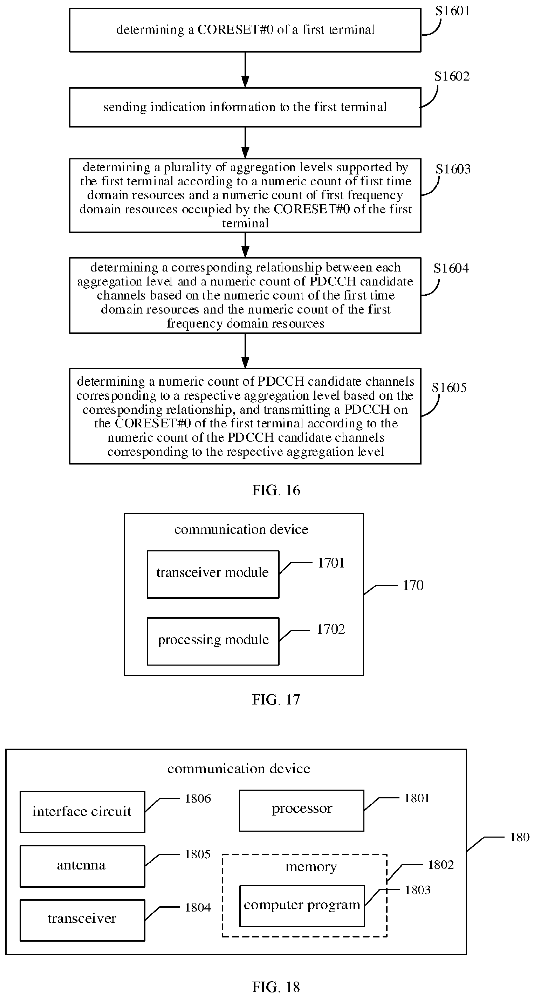

Referring to FIG. 16, FIG. 16 is a schematic flow chart illustrating a method for determining a CORESET#0 according to embodiments of the present invention. The method for determining the CORESET#0 is performed by a network device. As shown in FIG. 16, the method may include but is not limited to the following steps.

In S1601, a CORESET#0 of a first terminal is determined.

In S1602, indication information is sent to the first terminal.

The indication information indicates resource information of a CORESET#0 and a channel bandwidth supported by the first terminal, and the resource information and/or the channel bandwidth are used for determining the CORESET#0 of the first terminal.

The details of the steps S1601 and S1602 may refer to the relevant descriptions in the above embodiments, and will not be described again here.

In S1603, a plurality of aggregation levels supported by the first terminal are determined according to a numeric count of first time domain resources and a numeric count of first frequency domain resources occupied by the CORESET#0 of the first terminal.

The plurality of aggregation levels include an existing aggregation level and a newly added aggregation level.

In S1604, a corresponding relationship between each aggregation level and a numeric count of PDCCH candidate channels is determined based on the numeric count of the first time domain resources and the numeric count of the first frequency domain resources.

Furthermore, the corresponding relationship between the aggregation level and the numeric count of PDCCH candidate channels is redefined to facilitate blind detection of the PDCCH on the CORESET#0 of the first terminal based on the corresponding relationship.

Optionally, the corresponding relationship between the aggregation level and the numeric count of PDCCH candidate channels is shown in Table 3 and Table 4.

As shown in Table 3, in a case where AL=4, the numeric count of corresponding PDCCH candidate channels may be 3; in a case where AL=6, the numeric count of corresponding PDCCH candidate channels may be 2; and in a case where AL=12, the numeric count of corresponding PDCCH candidate channels may be 1.

As shown in Table 4, in a case where AL=3, the numeric count of corresponding PDCCH candidate channels may be 4; in a case where AL=6, the numeric count of corresponding PDCCH candidate channels may be 2; and in a case where AL=12, the numeric count of corresponding PDCCH candidate channels may be 1.

In S1605, a numeric count of PDCCH candidate channels corresponding to a respective aggregation level is determined based on the corresponding relationship, and a PDCCH is transmitted on the CORESET#0 of the first terminal according to the numeric count of the PDCCH candidate channels corresponding to the respective aggregation level.

In a case where AL=6, the numeric count of the corresponding PDCCH candidate channels may be 2, and the network device may transmit the PDCCH through 2 candidate channels in the case where AL=6. Accordingly, the first terminal performs the PDCCH blind detection through 2 candidate channels in the case where AL=6.

Regarding the newly added AL=12, the numeric count of corresponding PDCCH candidate channels may be 1. The network device may transmit the PDCCH through 1 candidate channel in the case where AL=12. Accordingly, the first terminal may perform the PDCCH blind detection through 1 candidate channel in the case where AL=12.

In embodiments of the present invention, after the CORESET#0 of the first terminal is determined, the determined CORESET#0 may be used to transmit the PDCCH to the first terminal, such that the first terminal may receive the PDCCH through the determined CORESET resource as far as possible to enhance the coverage of the channel. Further, expansion of the aggregation level may support the PDCCH blind detection of the newly added aggregation level, thereby improving the reception performance of the PDCCH.

In the above embodiments provided in the present invention, the method according to embodiments of the present invention is introduced from the perspectives of the network device and the first terminal, respectively. In order to implement the various functions in the method according to the above embodiments of the present invention, the network device and the first terminal may include a hardware structure and a software module to implement the above functions in the form of the hardware structure, the software module, or the hardware structure plus the software module. Any of the above functions may be implemented in the form of the hardware structure, the software module, or the hardware structure plus the software module.

Referring to FIG. 17, FIG. 17 is a schematic block diagram illustrating a communication device 170 according to embodiments of the present invention. The communication device 170 shown in FIG. 17 may include a transceiver module 1701 and a processing module 1702. The transceiver module 1701 may include a sending module and/or a receiving module. The sending module is configured to implement a sending function, and the receiving module is configured to implement a receiving function. The transceiver module 1701 may implement a sending function and/or a receiving function.

The communication device 170 may be a terminal (such as the first terminal in the aforementioned method embodiments), or may be an apparatus in a terminal, or may be an apparatus that may be used in cooperation with a terminal. Alternatively, the communication device 70 may be a network device, or may be an apparatus in a network device, or may be an apparatus that may be used in cooperation with a network device.

The communication device 170 is a terminal (such as the first terminal in the aforementioned method embodiment):
The processing module 1702 is configured to determine a CORESET#0 of a first terminal according to a channel bandwidth supported by the first terminal and/or a network indication.

Optionally, the processing module 1702 is further configured to determine frequency domain resources of the CORESET#0 within the channel bandwidth supported by the first terminal.

Optionally, the transceiver module 1701 is configured to receive indication information sent by the network device, and the indication information indicates a numeric count of second frequency domain resources and/or a numeric count of second time domain resources of a CORESET#0.

Optionally, the processing module 1702 is further configured to determine a numeric count of first frequency domain resources and/or a numeric count of first time domain resources of the CORESET#0 of the first terminal according to the indication information.

Optionally, the processing module 1702 is further configured to determine the numeric count of the first frequency domain resources according to the indication information; and/or determine the numeric count of the first time domain resources according to the numeric count of the second frequency domain resources and the indication information.

Optionally, the processing module 1702 is further configured to determine the numeric count of the second time domain resources indicated by the indication information as the numeric count of the first time domain resources in response to the numeric count of the second frequency domain resources not exceeding a first preset value, and the numeric count of the first frequency domain resources is the numeric count of the second frequency domain resources.

Optionally, the processing module 1702 is further configured to determine the numeric count of the first frequency domain resources as the first preset value in response to the numeric count of the second frequency domain resources exceeding the first preset value; and determine the numeric count of the first time domain resources in a set manner.

Optionally, the first preset value is determined according to a bandwidth supported by the first terminal or is specified by a protocol, and different subcarrier intervals have different first preset values.

Optionally, the processing module 1702 is further configured to determine the numeric count of the second time domain resources indicated by the indication information as the numeric count of the first time domain resources.

Optionally, the processing module 1702 is further configured to determine the numeric count of the first time domain resources according to the numeric count of the second time domain resources, the numeric count of the second frequency domain resources and the numeric count of the first frequency domain resources.

Optionally, the processing module 1702 is further configured to determine a ratio of the numeric count of the second frequency domain resources to the numeric count of the first frequency domain resources; and obtain a product of the ratio and the numeric count of the second time domain resources, and determine the product as the numeric count of the first time domain resources.

Optionally, the processing module 1702 is further configured to determine a numeric count of time domain resources occupied by the CORESET#0 of the first terminal as a fixed numeric count of symbols.

Optionally, the processing module 1702 is further configured to re-determine a mapping relationship between the indication information and a numeric count of time domain resources; and determine the numeric count of the first time domain resources according to the indication information received and the mapping relationship.

Optionally, the CORESET#0 of the first terminal has a different frequency domain resource position from that of a CORESET#0 of a second terminal. The processing module 1702 is further configured to determine an interval of N RBs between the CORESET#0 of the first terminal and the CORESET#0 of the second terminal, where N is a positive integer.

Optionally, the N value may be determined by any one of: a protocol; or indication information.

Optionally, the transceiver module 1701 is further configured to receive a PDSCH carrying an SIB1 by means of an RF retuning after receiving a PDCCH on the CORESET#0 of the first terminal.

Optionally, the transceiver module 1701 is further configured to monitor a PDCCH on the CORESET#0 of the first terminal in an i^{th} monitoring slot of a synchronization and PBCH block (SSB) in a case where there is an overlap of frequency domain resources between the two CORESET#0, and an (i+1)^{th} monitoring slot of the SSB is used for the second terminal to monitor a PDCCH on a CORESET#0 of the second terminal, and i is a positive integer.

Optionally, the transceiver module 1701 is further configured to determine a slot offset between the PDCCH on the CORESET#0 of the first terminal and a PDSCH corresponding to the PDCCH; and receive the PDCCH on the CORESET#0 of the first terminal and the corresponding PDSCH according to the slot offset.

Optionally, the transceiver module 1701 is further configured to receive the indication information sent by the network device, and first indication information indicates the numeric count of the second frequency domain resources and/or the numeric count of the second time domain resources of the CORESET#0 of the second terminal.

Optionally, the processing module 1702 is further configured to determine the numeric count of the first frequency domain resources and/or the numeric count of the first time domain resources of the CORESET#0 of the first terminal based on the indication information; and perform partial blind detection on a PDCCH for scheduling repetition of the SIB1 on the CORESET#0 of the first terminal by means of the RF retuning in response to a frequency domain bandwidth of the CORESET#0 of the first terminal exceeding the channel bandwidth of the first terminal.

Optionally, the transceiver module 1701 is further configured to receive DCI sent by the network device for scheduling the repetition of the SIB1, and the DCI has same scheduling information; and/or receive DCI sent by the network device for scheduling the repetition of the SIB 1 in segments at the same aggregation level and the same candidate channel position.

Optionally, the processing module 1702 is further configured to: determine a plurality of aggregation levels supported by the first terminal according to the numeric count of the time domain resources and the numeric count of the frequency domain resources occupied by the CORESET#0 of the first terminal, the plurality of aggregation levels including an existing aggregation level and a newly added aggregation level; and determine a corresponding relationship between each aggregation level and a numeric count of PDCCH candidate channels according to the numeric count of the first time domain resources and the numeric count of the first frequency domain resources.

Optionally, the transceiver module 1701 is further configured to: determine a numeric count of PDCCH candidate channels corresponding to a respective aggregation level according to the corresponding relationship, and perform PDCCH blind detection on the CORESET#0 according to the numeric count of the PDCCH candidate channels corresponding to the respective aggregation level.

The communication device 170 is a network device:
The processing module 1702 is configured to determine a CORESET#0 of a first terminal.

The transceiver module 1701 is configured to send indication information to the first terminal, the indication information indicates resource information of a CORESET#0 and a channel bandwidth supported by the first terminal, and the resource information and/or the channel bandwidth are used for determining the CORESET#0 of the first terminal.

Optionally, the indication information further indicates that frequency domain resources of the CORESET#0 of the first terminal do not exceed the channel bandwidth.

Optionally, the indication information indicates a numeric count of second frequency domain resources and/or a numeric count of second time domain resources occupied by the CORESET#0 to the first terminal.

Optionally, the indication information is used for determining a numeric count of first frequency domain resources occupied by the CORESET#0 of the first terminal; and/or the numeric count of the second frequency domain resources and the indication information are further used for determining a numeric count of first time domain resources occupied by the CORESET#0 of the first terminal.

Optionally, the numeric count of the second time domain resources indicated by the indication information is determined as the numeric count of the first time domain resources in a case where the numeric count of the second frequency domain resources does not exceed a first preset value.

Optionally, in a case where the numeric count of the second frequency domain resources exceeds the first preset value, the transceiver module 1702 is further configured to indicate the numeric count of the first frequency domain resources of the first terminal as the first preset value, and the numeric count of the first time domain resources is determined by the first terminal in a set manner.

Optionally, the numeric count of the first time domain resources is the numeric count of the second time domain resources indicated by the indication information.

Optionally, the numeric count of the first time domain resources is determined according to the numeric count of the second time domain resources, the numeric count of the second frequency domain resources, and the numeric count of the first frequency domain resources.

Optionally, a process for determining the numeric count of the first time domain resources includes: determining a ratio of the numeric count of the second frequency domain resources to the numeric count of the first frequency domain resources; and obtaining a product of the ratio and the numeric count of the second time domain resources, and determining the product as the numeric count of the first time domain resources.

Optionally, the numeric count of the first time domain resources is a fixed numeric count of symbols.

Optionally, the transceiver module 1701 is further configured to: determine a mapping relationship of the first terminal, the mapping relationship includes a relationship between the indication information and a numeric count of time domain resources occupied by the CORESET#0; and the mapping relationship indicates the first terminal to determine the numeric count of the first time domain resources according to the indication information received.

Optionally, the indication information indicates an interval of N RBs between the CORESET#0 of the first terminal and the CORESET#0 of the second terminal, and N is a positive integer.

Optionally, the transceiver module 1701 is further configured to transmit a PDSCH for carrying an SIB1 to the first terminal by means of an RF retuning after a PDCCH is transmitted on the CORESET#0 of the first terminal.

Optionally, the transceiver module 1701 is further configured to: configure the CORESET#0 of the first terminal in an i^{th} monitoring slot of an SSB in a case where there is an overlap of frequency domain resources between the two CORESET#0; and configure the CORESET#0 of the second terminal in an (i+1)^{th} monitoring slot of the SSB.

Optionally, the transceiver module 1701 is further configured to determine a slot offset between a PDCCH on the CORESET#0 of the first terminal and a PDSCH corresponding to the PDCCH; and perform across-slot transmission of the PDCCH and the corresponding PDSCH according to the slot offset.

Optionally, the transceiver module 1701 is further configured to partially transmit a PDSCH for scheduling repetition of the SIB1 on the CORESET#0 of the first terminal by means of the RF retuning in a case where a frequency domain bandwidth of the CORESET#0 of the first terminal exceeds the set channel bandwidth of the first terminal.

Optionally, the transceiver module 1701 is further configured to send DCI for scheduling the repetition of the SIB1 to the first terminal, where the DCI has the same scheduling information; and/or partially send the DCI for scheduling the repetition of the SIB1 to the first terminal at the same aggregation level and the same candidate channel position.

Optionally, the processing module 1702 is further configured to determine a plurality of aggregation levels supported by the first terminal according to the numeric count of the first time domain resources and the numeric count of the first frequency domain resources occupied by the CORESET#0 of the first terminal, where the plurality of aggregation levels include an existing aggregation level and a newly added aggregation level; and determine a corresponding relationship between each aggregation level and a numeric count of PDCCH candidate channels based on the numeric count of the first time domain resources and the numeric count of the first frequency domain resources.

Optionally, the transceiver module 1701 is further configured to determine a numeric count of PDCCH candidate channels corresponding to a respective aggregation level based on the corresponding relationship, and transmit a PDCCH on the CORESET#0 of the first terminal according to the numeric count of the PDCCH candidate channels corresponding to the respective aggregation level.

In embodiments of the present invention, the CORESET#0 of the first terminal is determined according to the channel bandwidth supported by the first terminal and/or the network indication, such that the first terminal may use the determined CORESET#0, and thus the first terminal may be supported to receive the PDCCH through as many CORESET resources as possible to enhance the coverage of the channel and improve the reception performance of the PDCCH.

Referring to FIG. 18, FIG. 18 is a schematic block diagram illustrating another communication device 180 according to embodiments of the present invention. The communication device 180 may be a network device; a terminal (such as the first terminal in the aforementioned method embodiment); a chip, a chip system or a processor supporting the network device to implement the above-mentioned method; or a chip, a chip system or a processor supporting the terminal to implement the above-mentioned method. The communication device 180 may be configured to implement the method as described in above method embodiments, with particular reference to the description of method embodiments described above.

The communication device 180 may include one or more processors 1801. The processor 1801 may be a general-purpose processor or a special-purpose processor, etc. It may be, for example, a baseband processor or a central processor. The baseband processor may be configured to process a communication protocol and communication data, and the central processor may be configured to control a communication device (such as a base station, a baseband chip, a terminal, a terminal chip, a DU or a CU, etc.), execute a computer program and process data of the computer program.

Optionally, the communication device 180 may further include one or more memories 1802 on which the computer program 1803 may be stored, and the processor 1801 executes the computer program 1803 to cause the communication device 180 to perform the method as described in the above method embodiments. Optionally, the memory 1802 may also have the data stored therein. The communication device 180 and the memory 1802 may be provided independently or integrated together.

Optionally, the communication device 180 may further include a transceiver 1804 and an antenna 1805. The transceiver 1804 may be referred to as a transceiver unit, a transceiver machine, or a transceiver circuit for implementing a transceiving function. The transceiver 1804 may include a receiver and a transmitter, the receiver may be referred to as a receiving machine or a receiving circuit or the like for implementing a receiving function; and the transmitter may be referred to as a transmitting machine or a transmission circuit or the like for implementing a transmitting function.

Optionally, the communication device 180 may further include one or more interface circuits 1806. The interface circuit 1806 is configured to receive code instructions and transmit the code instructions to the processor 1801. The processor 1801 executes the code instructions to cause the communication device 180 to perform the methods described in the above method embodiments.

In an implementation, the processor 1801 may further include the transceiver for implementing receiving and transmitting functions. For example, the transceiver may be a transceiver circuit, or an interface, or an interface circuit. The transceiver circuit, interface, or interface circuit for implementing the receiving and transmitting functions may be separated or integrated. The transceiver circuit, interface or interface circuit may be configured to read and write code/data, or the transceiver circuit, interface or interface circuit may be configured for transmission or transfer of signals.

In an implementation, the processor 1801 may have stored therein the computer program 1803 that, when run on the processor 1801, causes the communication device 180 to perform the methods described in the above method embodiments. The computer program 1003 may be solidified in the processor 1801, in which case the processor 1801 may be implemented in hardware.

In an implementation, the communication device 180 may include a circuit that may implement a transmitting, receiving or communicating function in foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in above embodiments may be the network device or the terminal (such as the first terminal in the aforementioned method embodiments), but the scope of the communication device described in the present invention is not limited thereto. Moreover, the structure of the communication device may not be limited by FIG. 18. The communication device may be a stand-alone device or may be a part of a larger device. For example, the communication device may be:
(1) a stand-alone integrated circuit (IC), or a chip, or a chip system or a subsystem;
(2) a set of one or more ICs, optionally the set of ICs may also include a storage component for storing the data and the computer program;
(3) ASIC, such as modem;
(4) a module that may be embedded in other devices;
(5) a receiver, a terminal, an intelligent terminal, a cellular phone, a wireless device, a handset, a mobile unit, an on-vehicle device, a network device, a cloud device, an artificial intelligence device, etc.; or
(6) others.

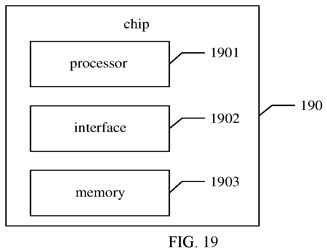

In a case where the communication device may be the chip or the chip system, reference may be made to the schematic block diagram of the chip shown in FIG. 19. The chip 190 shown in FIG. 19 includes a processor 1901 and an interface 1902. There may be one or more processors 1901 and a plurality of interfaces 1902.

Regarding a case where the chip is configured to implement the functions of the terminal (such as the first terminal in the aforementioned method embodiments) in embodiments of the present invention:
the processor 1901 is configured to determine a CORESET#0 of the first terminal according to a channel bandwidth supported by a first terminal and/or a network indication.

Optionally, the processor 1901 is further configured to determine frequency domain resources of the CORESET#0 within the channel bandwidth supported by the first terminal.

Optionally, the interface 1902 is configured to receive indication information sent by a network device, and the indication information indicates a numeric count of second frequency domain resources and/or a numeric count of second time domain resources of a CORESET#0.

Optionally, the processor 1901 is further configured to determine a numeric count of first frequency domain resources and/or a numeric count of first time domain resources of the CORESET#0 of the first terminal according to the indication information.

Optionally, the processor 1901 is further configured to determine the numeric count of the first frequency domain resources according to the indication information; and/or determine the numeric count of the first time domain resources according to the numeric count of the second frequency domain resources and the indication information.

Optionally, the processor 1901 is further configured to determine the numeric count of the second time domain resources indicated by the indication information as the numeric count of the first time domain resources in response to the numeric count of the second frequency domain resources not exceeding a first preset value, and the numeric count of the first frequency domain resources is the numeric count of the second frequency domain resources.

Optionally, the processor 1901 is further configured to determine the numeric count of the first frequency domain resources as the first preset value in response to the numeric count of the second frequency domain resources exceeding the first preset value; and determining the numeric count of the first time domain resources in a set manner.

Optionally, the first preset value is determined according to a bandwidth supported by the first terminal or is specified by a protocol, and different subcarrier intervals have different first preset values.

Optionally, the processor 1901 is further configured to determine the numeric count of the second time domain resources indicated by the indication information as the numeric count of the first time domain resources.

Optionally, the processor 1901 is further configured to determine the numeric count of the first time domain resources according to the numeric count of the second time domain resources, the numeric count of the second frequency domain resources and the numeric count of the first frequency domain resources.

Optionally, the processor 1901 is further configured to determine a ratio of the numeric count of the second frequency domain resources to the numeric count of the first frequency domain resources; and obtain a product of the ratio and the numeric count of the second time domain resources, and determine the product as the numeric count of the first time domain resources.

Optionally, the processor 1901 is further configured to determine a numeric count of time domain resources occupied by the CORESET#0 of the first terminal to be a fixed numeric count of symbols.

Optionally, the processor 1901 is further configured to re-determine a mapping relationship between the indication information and a numeric count of time domain resources; and determine the numeric count of the first time domain resources according to the indication information received and the mapping relationship.

Optionally, the CORESET#0 of the first terminal has a different frequency domain resource position from that of a CORESET#0 of a second terminal. The processor 1901 is further configured to determine an interval of N RBs between the CORESET#0 of the first terminal and the CORESET#0 of the second terminal, where N is a positive integer.

Optionally, the N value may be determined by any one of: a protocol; or indication information.

Optionally, the interface 1902 is further configured to receive a PDSCH carrying an SIB1 by means of an RF retuning after receiving a PDCCH on the CORESET#0 of the first terminal.

Optionally, the interface 1902 is further configured to monitor a PDCCH on the CORESET#0 of the first terminal in an i^{th} monitoring slot of an SSB in a case where there is an overlap of frequency domain resources between the two CORESET#0, and an (i+1)^{th} monitoring slot of the SSB is used for a second terminal to monitor a PDCCH on the CORESET#0 of the second terminal, and i is a positive integer.

Optionally, the interface 1902 is further configured to determine a slot offset between the PDCCH on the CORESET#0 of the first terminal and a PDSCH corresponding to the PDCCH; and receive the PDCCH on the CORESET#0 of the first terminal and the corresponding PDSCH according to the slot offset.

Optionally, the interface 1902 is further configured to receive indication information sent by the network device, and the first indication information indicates the numeric count of the second frequency domain resources and/or the numeric count of the second time domain resources of the CORESET#0 of the second terminal.

Optionally, the processor 1901 is further configured to: determine the numeric count of the first frequency domain resources and/or the numeric count of the first time domain resources of the CORESET#0 of the first terminal based on the indication information; and perform partial blind detection on a PDCCH for scheduling repetition of the SIB1 on the CORESET#0 of the first terminal by means of the RF retuning in response to a frequency domain bandwidth of the CORESET#0 of the first terminal exceeding the channel bandwidth of the first terminal.

Optionally, the interface 1902 is further configured to: receive DCI sent by the network device for scheduling the repetition of the SIB1, the DCI having same scheduling information; and/or partially receive DCI sent by the network device for scheduling the repetition of the SIB1 at the same aggregation level and the same candidate channel position.

Optionally, the processor 1901 is further configured to: determine a plurality of aggregation levels supported by the first terminal according to the numeric count of the time domain resources and the numeric count of the frequency domain resources occupied by the CORESET#0 of the first terminal, the plurality of aggregation levels including an existing aggregation level and a newly added aggregation level; and determine a corresponding relationship between each aggregation level and a numeric count of PDCCH candidate channels according to the numeric count of the first time domain resources and the numeric count of the first frequency domain resources.

Optionally, the interface 1902 is further configured to: determine a numeric count of PDCCH candidate channels corresponding to a respective aggregation level according to the corresponding relationship, and perform PDCCH blind detection on the CORESET#0 according to the numeric count of the PDCCH candidate channels corresponding to the respective aggregation level.

Regarding a case where the chip is configured to implement the functions of the network device in embodiments of the present invention:
the processor 1901 is configured to determine a CORESET#0 of a first terminal; and
the interface 1902 is configured to send indication information to the first terminal, the indication information indicates resource information of a CORESET#0 and a channel bandwidth supported by the first terminal, and the resource information and/or the channel bandwidth are used for determining the CORESET#0 of the first terminal.

Optionally, the indication information further indicates that frequency domain resources of the CORESET#0 of the first terminal do not exceed the channel bandwidth.

Optionally, the indication information indicates a numeric count of second frequency domain resources and/or a numeric count of second time domain resources occupied by the CORESET#0 to the first terminal.

Optionally, the indication information is used for determining a numeric count of first frequency domain resources occupied by the CORESET#0 of the first terminal; and/or the numeric count of the second frequency domain resources and the indication information are further used for determining a numeric count of first time domain resources occupied by the CORESET#0 of the first terminal.

Optionally, the numeric count of the second time domain resources indicated by the indication information is determined as the numeric count of the first time domain resources in a case where the numeric count of the second frequency domain resources does not exceed a first preset value.

Optionally, in a case where the numeric count of the second frequency domain resources exceeds the first preset value, the interface 1902 is further configured to indicate the numeric count of the first frequency domain resources of the first terminal as the first preset value, and the numeric count of the first time domain resources is determined by the first terminal in a set manner.

Optionally, the numeric count of the first time domain resources is the numeric count of the second time domain resources indicated by the indication information.

Optionally, the numeric count of the first time domain resources is determined according to the numeric count of the second time domain resources, the numeric count of the second frequency domain resources, and the numeric count of the first frequency domain resources.

Optionally, a process for determining the numeric count of the first time domain resources includes: determining a ratio of the numeric count of the second frequency domain resources to the numeric count of the first frequency domain resources; obtaining a product of the ratio and the numeric count of the second time domain resources, and determining the product as the numeric count of the first time domain resources.

Optionally, the numeric count of the first time domain resources is a fixed numeric count of symbols.

Optionally, the interface 1902 is further configured to determine a mapping relationship of the first terminal, the mapping relationship includes a relationship between the indication information and a numeric count of time domain resources occupied by the CORESET#0; and the mapping relationship indicates the first terminal to determine the numeric count of the first time domain resources according to the indication information received.

Optionally, the indication information indicates an interval of N RBs between the CORESET#0 of the first terminal and the CORESET#0 of the second terminal, and N is a positive integer.

Optionally, the interface 1902 is further configured to transmit a PDSCH for carrying an SIB1 to the first terminal by means of an RF retuning after a PDCCH is transmitted on the CORESET#0 of the first terminal.

Optionally, the interface 1902 is further configured to: configure the CORESET#0 of the first terminal in an i^{th} monitoring slot of an SSB in a case where there is an overlap of frequency domain resources between the two CORESET#0; and configure the CORESET#0 of the second terminal in an (i+1)^{th} monitoring slot of the SSB.

Optionally, the interface 1902 is further configured to: determine a slot offset between a PDCCH on the CORESET#0 of the first terminal and a PDSCH corresponding to the PDCCH; and perform across-slot transmission of the PDCCH and the corresponding PDSCH according to the slot offset.

Optionally, the interface 1902 is further configured to partially transmit a PDSCH for scheduling repetition of the SIB1 on the CORESET#0 of the first terminal by means of the RF retuning in a case where a frequency domain bandwidth of the CORESET#0 of the first terminal exceeds the set channel bandwidth of the first terminal.

Optionally, the interface 1902 is further configured to send DCI for scheduling the repetition of the SIB1 to the first terminal, where the DCI has same scheduling information; and/or partially send the DCI for scheduling the repetition of the SIB1 to the first terminal at the same aggregation level and the same candidate channel position.

Optionally, the processor 1901 is further configured to: determine a plurality of aggregation levels supported by the first terminal according to a numeric count of first time domain resources and a numeric count of first frequency domain resources occupied by the CORESET#0 of the first terminal, where the plurality of aggregation levels include an existing aggregation level and a newly added aggregation level; and determine a corresponding relationship between each aggregation level and a numeric count of PDCCH candidate channels based on the numeric count of the first time domain resources and the numeric count of the first frequency domain resources.

Optionally, the interface 1902 is further configured to: determine a numeric count of PDCCH candidate channels corresponding to a respective aggregation level based on the corresponding relationship, and transmit a PDCCH on the CORESET#0 of the first terminal according to the numeric count of the PDCCH candidate channels corresponding to the respective aggregation level.

Optionally, the chip 190 further includes the memory 1903 for storing necessary computer programs and data.

In embodiments of the present invention, the CORESET#0 of the first terminal is determined according to the channel bandwidth supported by the first terminal and/or the network indication, such that the first terminal may use the determined CORESET#0, and thus the first terminal may be supported to receive the PDCCH through as many CORESET resources as possible to enhance the coverage of the channel and improve the reception performance of the PDCCH.

Those skilled in the art may further appreciate that the various illustrative logical blocks and steps described in embodiments of the present invention may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be considered to be beyond the scope of protection of embodiments of the present invention.

Embodiments of the present invention further provide a system for determining a CORESET#0, the system includes the communication device as the terminal (such as the first terminal in the aforementioned method embodiments) and the communication device as the network device described in forgoing embodiments of FIG. 17, or the system includes the communication device as the terminal (such as the first terminal in the aforementioned method embodiments) and the communication device as the network device described in forgoing embodiments of FIG. 18.

The present invention further provides a readable storage medium having instructions stored thereon that, when executed by a computer, causes the functions of any of the method embodiments described above to be implemented.

The present invention also provides a computer program product that, when executed by a computer, causes the functions of any of the method embodiments described above to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer programs are loaded and executed on the computer, all or part of the processes or functions according to embodiments of the present invention will be generated. The computer may be a general purpose computer, a special purpose computer, a computer network, or other programmable devices. The computer programs may be stored in a computer-readable storage medium or transmitted from one computer-readable storage medium to another computer-readable storage medium. For example, the computer programs may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, predefinition, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above has described some specific embodiments of the present invention, but the scope of the present invention is not limited thereto. Any person skilled in the art may easily think of changes or substitutions within the technical scope of the present invention, which shall be covered by the protection scope of the present invention. Therefore, the protection scope of the present invention shall be in line with the attached claims.

## Claims

1. A method for determining a control resource set CORESET#0, performed by a first terminal, comprising:
determining a CORESET#0 of the first terminal according to a channel bandwidth supported by the first terminal and/or a network indication.

2. The method of claim 1, wherein determining the CORESET#0 of the first terminal according to the channel bandwidth supported by the first terminal comprises:
determining frequency domain resources of the CORESET#0 within the channel bandwidth supported by the first terminal.

3. The method of claim 1, wherein determining the CORESET#0 of the first terminal according to the network indication comprises:
receiving indication information sent by a network device, wherein the indication information indicates a numeric count of second frequency domain resources and/or a numeric count of second time domain resources of a CORESET#0; and
determining a numeric count of first frequency domain resources and/or a numeric count of first time domain resources of the CORESET#0 of the first terminal according to the indication information.

4. The method of claim 3, wherein determining the numeric count of the first frequency domain resources and/or the numeric count of the first time domain resources of the CORESET#0 of the first terminal according to the indication information comprises:
determining the numeric count of the first frequency domain resources according to the indication information; and/or
determining the numeric count of the first time domain resources according to the numeric count of the second frequency domain resources and the indication information.

5. The method of claim 4, further comprising:
determining the numeric count of the second time domain resources indicated by the indication information as the numeric count of the first time domain resources in response to the numeric count of the second frequency domain resources not exceeding a first preset value, wherein the numeric count of the first frequency domain resources is the numeric count of the second frequency domain resources.

6. The method of claim 4, further comprising:
determining the numeric count of the first frequency domain resources as a first preset value in response to the numeric count of the second frequency domain resources exceeding the first preset value; and
determining the numeric count of the first time domain resources in a set manner.

7. The method of claim 6, wherein determining the numeric count of the first time domain resources in the set manner comprises:
determining the numeric count of the second time domain resources indicated by the indication information as the numeric count of the first time domain resources.

8. The method of claim 6, wherein determining the numeric count of the first time domain resources in the set manner comprises:
determining the numeric count of the first time domain resources according to the numeric count of the second time domain resources, the numeric count of the second frequency domain resources and the numeric count of the first frequency domain resources.

9. The method of claim 8, wherein determining the numeric count of the first time domain resources according to the numeric count of the second time domain resources, the numeric count of the second frequency domain resources and the numeric count of the first frequency domain resources comprises:
determining a ratio of the numeric count of the second frequency domain resources to the numeric count of the first frequency domain resources; and
obtaining a product of the ratio and the numeric count of the second time domain resources, and determining the product as the numeric count of the first time domain resources.

10. The method of claim 6, wherein determining the numeric count of the first time domain resources in the set manner comprises:
determining a numeric count of time domain resources occupied by the CORESET#0 of the first terminal to be a fixed numeric count of symbols.

11. The method of claim 6, wherein determining the numeric count of the first time domain resources in the set manner comprises:
redetermining a mapping relationship between the indication information and a numeric count of time domain resources; and
determining the numeric count of the first time domain resources according to the indication information received and the mapping relationship.

12. The method of any one of claims 2 to 11, wherein the CORESET#0 of the first terminal has a different frequency domain resource position from that of a CORESET#0 of a second terminal; and determining a frequency domain position where the CORESET#0 of the first terminal is located comprises:
determining an interval of N RBs between the CORESET#0 of the first terminal and the CORESET#0 of the second terminal, wherein N is a positive integer.

13. The method of claim 12, further comprising:
receiving a physical downlink shared channel (PDSCH) carrying a system information block 1 (SIB1) by means of a radio frequency retuning (RF retuning) after receiving a physical downlink control channel (PDCCH) on the CORESET#0 of the first terminal.

14. The method of any one of claims 2 to 11, further comprising:
monitoring a physical downlink control channel (PDCCH) on the CORESET#0 of the first terminal in an i^{th} monitoring slot of a synchronization and PBCH block (SSB) in a case where there is an overlap of frequency domain resources between the two CORESET#0, wherein an (i+1)^{th} monitoring slot of the SSB is used for a second terminal to monitor a PDCCH on a CORESET#0 of the second terminal, and i is a positive integer.

15. The method of claim 14, further comprising:
determining a slot offset between the PDCCH on the CORESET#0 of the first terminal and a physical downlink shared channel (PDSCH) corresponding to the PDCCH; and
receiving the PDCCH on the CORESET#0 of the first terminal and the corresponding PDSCH according to the slot offset.

16. The method of claim 1, wherein determining the CORESET#0 of the first terminal according to the channel bandwidth supported by the first terminal and the network indication further comprises:
receiving indication information sent by a network device, wherein first indication information indicates a numeric count of second frequency domain resources and/or a numeric count of second time domain resources of a CORESET#0 of a second terminal;
determining a numeric count of first frequency domain resources and/or a numeric count of first time domain resources of the CORESET#0 of the first terminal based on the indication information; and
performing partial blind detection on a physical downlink control channel (PDCCH) for scheduling repetition of system information block 1 (SIB1) on the CORESET#0 of the first terminal by means of a radio frequency retuning (RF retuning) in response to a frequency domain bandwidth of the CORESET#0 of the first terminal exceeding the channel bandwidth of the first terminal.

17. The method of claim 16, further comprising:
receiving downlink control information (DCI) sent by the network device for scheduling the repetition of the SIB1, wherein the DCI has same scheduling information; and/or
partially receiving DCI sent by the network device for scheduling the repetition of the SIB1 at the same aggregation level and the same candidate channel position.

18. The method of claim 1, further comprising:
determining a plurality of aggregation levels supported by the first terminal according to a numeric count of time domain resources and a numeric count of frequency domain resources occupied by the CORESET#0 of the first terminal, wherein the plurality of aggregation levels comprise an existing aggregation level and a newly added aggregation level;
determining a corresponding relationship between each aggregation level and a numeric count of physical downlink control channel (PDCCH) candidate channels according to the numeric count of the first time domain resources and the numeric count of the first frequency domain resources; and
determining a numeric count of PDCCH candidate channels corresponding to a respective aggregation level according to the corresponding relationship, and performing PDCCH blind detection on the CORESET#0 according to the numeric count of the PDCCH candidate channels corresponding to the respective aggregation level.

19. A method for determining a control resource set CORESET#0, performed by a network device, comprising:
determining a CORESET#0 of a first terminal; and
sending indication information to the first terminal, wherein the indication information indicates resource information of a CORESET#0 of a second terminal and a channel bandwidth supported by the first terminal, and the resource information and/or the channel bandwidth are used for determining the CORESET#0 of the first terminal.

20. The method of claim 19, wherein the indication information further indicates that frequency domain resources of the CORESET#0 of the first terminal do not exceed the channel bandwidth.

21. The method of claim 19, wherein the indication information indicates a numeric count of second frequency domain resources and/or a numeric count of second time domain resources occupied by the CORESET#0 to the first terminal.

22. The method of claim 21, wherein the indication information is used for determining a numeric count of first frequency domain resources occupied by the CORESET#0 of the first terminal; and/or
the numeric count of the second frequency domain resources and the indication information are further used for determining a numeric count of first time domain resources occupied by the CORESET#0 of the first terminal.

23. The method of claim 22, wherein the numeric count of the second time domain resources indicated by the indication information is determined as the numeric count of the first time domain resources in a case where the numeric count of the second frequency domain resources does not exceed a first preset value.

24. The method of claim 23, wherein the numeric count of the first frequency domain resources of the first terminal is indicated as the first preset value in a case where the numeric count of the second frequency domain resources exceeds the first preset value, wherein the numeric count of the first time domain resources is determined by the first terminal in a set manner.

25. The method of claim 24, wherein the numeric count of the first time domain resources is the numeric count of the second time domain resources indicated by the indication information.

26. The method of claim 24, wherein the numeric count of the first time domain resources is determined according to the numeric count of the second time domain resources, the numeric count of the second frequency domain resources, and the numeric count of the first frequency domain resources.

27. The method of claim 26, wherein a process for determining the numeric count of the first time domain resources comprises:
determining a ratio of the numeric count of the second frequency domain resources to the numeric count of the first frequency domain resources; and
obtaining a product of the ratio and the numeric count of the second time domain resources, and determining the product as the numeric count of the first time domain resources.

28. The method of claim 24, wherein the numeric count of the first time domain resources is a fixed numeric count of symbols.

29. The method of claim 24, further comprising:
determining a mapping relationship of the first terminal, wherein the mapping relationship comprises a relationship between the indication information and a numeric count of time domain resources occupied by the CORESET#0; and the mapping relationship indicates the first terminal to determine the numeric count of the first time domain resources according to the indication information received.

30. The method of any one of claims 20 to 29, wherein the indication information indicates an interval of N RBs between the CORESET#0 of the first terminal and the CORESET#0 of the second terminal, and N is a positive integer.

31. The method of claim 30, further comprising:
transmitting a physical downlink shared channel (PDSCH) for carrying a system information block 1 (SIB1) to the first terminal by means of a radio frequency retuning (RF retuning) after a physical downlink control channel (PDCCH) is transmitted on the CORESET#0 of the first terminal.

32. The method of any one of claims 20 to 29, further comprising:
configuring the CORESET#0 of the first terminal in an i^{th} monitoring slot of a synchronization and PBCH block (SSB) in a case where there is an overlap of frequency domain resources between the two CORESET#0; and
configuring the CORESET#0 of the second terminal in an (i+1)^{th} monitoring slot of the SSB, wherein i is a positive integer.

33. The method of claim 32, further comprising:
determining a slot offset between a physical downlink control channel (PDCCH) on the CORESET#0 of the first terminal and a physical downlink shared channel (PDSCH) corresponding to the PDCCH; and
performing across-slot transmission of the PDCCH and the corresponding PDSCH according to the slot offset.

34. The method of claim 19, further comprising:
partially transmitting a physical downlink shared channel (PDSCH) for scheduling repetition of a system information block 1 (SIB1) on the CORESET#0 of the first terminal by means of a radio frequency retuning (RF retuning) in a case where a frequency domain bandwidth of the CORESET#0 of the first terminal exceeds the set channel bandwidth of the first terminal.

35. The method of claim 34, further comprising:
sending downlink control information (DCI) for scheduling the repetition of the SIB1 to the first terminal, wherein the DCI has same scheduling information; and/or
partially sending the DCI for scheduling the repetition of the SIB1 to the first terminal at the same aggregation level and the same candidate channel position.

36. The method of claim 19, further comprising:
determining a plurality of aggregation levels supported by the first terminal according to a numeric count of first time domain resources and a numeric count of first frequency domain resources occupied by the CORESET#0 of the first terminal, wherein the plurality of aggregation levels comprise an existing aggregation level and a newly added aggregation level;
determining a corresponding relationship between each aggregation level and a numeric count of physical downlink control channel (PDCCH) candidate channels based on the numeric count of the first time domain resources and the numeric count of the first frequency domain resources; and
determining a numeric count of PDCCH candidate channels corresponding to a respective aggregation level based on the corresponding relationship, and transmitting a PDCCH on the CORESET#0 of the first terminal according to the numeric count of the PDCCH candidate channels corresponding to the respective aggregation level.

37. A communication device, comprising:
a processing module configured to determine a CORESET#0 of a first terminal according to a channel bandwidth supported by the first terminal and/or a network indication.

38. A communication device, comprising:
a processing module configured to determine a CORESET#0 of a first terminal; and
a transceiver module configured to send indication information to the first terminal, wherein the indication information indicates resource information of a CORESET#0 of a second terminal and a channel bandwidth supported by the first terminal, and the resource information and/or the channel bandwidth are used for determining the CORESET#0 of the first terminal.

39. A communication device, comprising:
a processor; and
a memory,
wherein a computer program is stored in the memory, and the processor is configured to execute the computer program stored in the memory to cause the device to perform the method of any one of claims 1 to 18.

40. A communication device, comprising:
a processor; and
a memory,
wherein a computer program is stored in the memory, and the processor is configured to execute the computer program stored in the memory to cause the device to perform the method of any one of claims 19 to 36.

41. A communication device, comprising:
a processor; and
an interface circuit,
wherein the interface circuit is configured to receive code instructions and transmit the code instructions to the processor; and
the processor is configured to run the code instructions to perform the method of any one of claims 1 to 18.

42. A communication device, comprising:
a processor; and
an interface circuit,
wherein the interface circuit is configured to receive code instructions and transmit the code instructions to the processor; and
the processor is configured to run the code instructions to perform the method of any one of claims 19 to 36.

43. A computer-readable storage medium having stored therein instructions that, when executed, cause the method of any one of claims 1 to 18 to be implemented.

44. A computer-readable storage medium having stored therein instructions that, when executed, cause the method of any one of claims 19 to 36 to be implemented.
